# EUROPEAN PATENT SPECIFICATION

(11) **EP 2 352 082 B1**
(45) Date of publication and mention of the grant of the patent: **28.11.2018**
(21) Application number: 09820420.9
(22) Date of filing: 13.10.2009
(51) Int. Cl.: G06F 9/30, G06F 9/34, G06F 9/38, G06F 15/80

(54) **DATA PROCESSING DEVICE FOR PERFORMING A PLURALITY OF CALCULATION PROCESSES IN PARALLEL**
DATENVERARBEITUNGSEINRICHTUNG ZUR PARALLELEN DURCHFÜHRUNG VON MEHREREN RECHENPROZESSEN
DISPOSITIF DE TRAITEMENT DE DONNÉES POUR RÉALISER PLUSIEURS PROCESSUS DE CALCUL EN PARALLÈLE

(30) Priority: 14.10.2008 JP 2008265312
(43) Date of publication of application: 03.08.2011
(73) Proprietor: National University Corporation Nara Institute of Science and Technology, Ikoma-shi, Nara 630-0192 (JP)
(72) Inventor: NAKASHIMA, Yasuhiko, Ikoma-shi, Nara 630-0192 (JP); NAKADA, Takashi, Ikoma-shi, Nara 630-0192 (JP)
(74) Representative: Treeby, Philip David William
(86) International application number: PCT/JP2009/005306
(87) International publication number: WO 2010/044242

(56) References cited:
- WO-A1-96/29646
- JP-A- 2001 147 799
- JP-A- 2003 099 249
- JP-T- 2005 539 293
- US-A1- 2004 078 554
- US-B1- 7 069 372
- SCHMIT, H ET AL.: 'PipeRench: A virtualized programmable datapath in 0.18 micron technology' PROCEEDINGS OF THE IEEE CUSTOM INTEGRATED CIRCUITS CONFERENCE 2002 15 May 2002, pages 63 - 66, XP008147180

## Description

### Technical Field

The present invention relates to a data processing device which includes a plurality of calculation units and which allows the calculation units to perform calculation processes in a synchronized manner.

### Background Art

There have been proposed many techniques for improving effective performance of recent microprocessors. According to such techniques, the effective performance is improved by reducing a machine cycle and increasing the number of instructions to be executed per machine cycle.

For example, as such the technique in which many instructions are processed in parallel, a calculation unit array technique is known (see, e.g., Patent Literatures 1 to 3). Specifically, according to the calculation unit array technique, a calculation unit network is fixed in order to suit with intended data processing, and input data is fed to the fixed calculation unit network.

The calculation unit array technique utilizes a calculation unit network made up of a plurality of calculation units. This makes it possible to execute many functions in parallel.

However, the calculation unit array technique does not allow the execution of existing machine language instructions. Therefore, the calculation unit array technique needs machine language instruction generating means exclusively for generating machine language instructions specific to the calculation unit array technique, and thus lacks general versatility.

In contrast, for example, a superscalar technique, a vector technique, and a VLIW technique are known as techniques which make it possible to execute general machine language instructions in parallel. According to these techniques, a plurality of calculations and/or the like are directed by one instruction and are executed concurrently.

The superscalar technique is such a technique by which hardware dynamically detects, from a machine language instruction string, machine language instructions which are concurrently executable, and the detected machine language instructions are executed in parallel.

The superscalar technique is advantageous in that existing software assets can be utilized as they are. However, because of its complex mechanism and large power consumption, the superscalar technique is not often employed recently.

The vector technique is such a technique by which a vector register including many registers being one-dimensionally arranged is used to repeatedly perform basic operations such as loading, calculation, and storing. The vector technique allows a power-efficient speedup. In addition, the vector technique eliminates the need for a cache memory. This makes it possible to assure a data transfer rate between a main memory and the vector register. This makes it possible to achieve a stable speedup.

However, according to the vector technique, a data transfer mechanism between the main memory and the vector register is made large and involves a large delay inevitably. Thus, the vector technique is excessive to be employed in an application area such as an embedded system for image processing from which a certain amount of data reuse can be expected.

The VLIW technique is such a technique that a plurality of calculations and/or the like are directed by one instruction, and are executed concurrently. According to the VLIW technique, for example, four instructions are fetched at a time, and then decoded at a time. Then, necessary pieces of data are read out from general-purpose registers so that a plurality of calculation devices perform calculations at a time. Then, results of the calculations are stored in calculation result storing means of the calculation devices.

In the next cycle, the results of the calculations are read out from the calculation result storing means so as to be written into the general-purpose registers. Further, if the results of the calculations thus read out are necessary in the next calculations, the results of the calculations are bypassed to the calculation devices via the inputs thereof.

On the other hand, a loading instruction is executed in the following manner: LD/ST units refer to cache memories so as to obtain data therefrom, and then store the data as a loading result in loading result storing means of the LD/ST units. Thereafter, in the next cycle, the LD/ST units perform the same operation as the calculation devices.

In this manner, the VLIW technique makes it possible to concurrently perform the same number of calculations as the numbers of adjacently-arranged calculation devices and adjacently-arranged LD/ST units. Further, according to the VLIW technique, instruction strings which are executable in parallel are scheduled in advance by a compiler or the like. Therefore, unlike the superscalar technique, the VLIW technique does not need the mechanism by which hardware dynamically detects machine language instructions which are concurrently executable. Thus, the VLIW technique allows power-efficient instruction execution.

However, the VLIW technique cannot concurrently execute more than several instructions, as is the case with the superscalar technique. The first reason for this is that an actual program does not contain a very large number of instructions which can be determined in advance to be executable in parallel. With regard to this, although programs in some fields such as image processing are known to have sufficient instruction level parallelism, programs typically do not contain a very large number of instructions which are executable in parallel.

The second reason is as follows: In order to increase the number of instructions which are executable in parallel, it is also necessary to increase the number of circuits called ports which circuits are necessary to read/write data from/into a general-purpose register. However, it is extremely difficult to realize, as an actual circuit, a register file which can respond to the parallel execution of several dozens of instructions. The reason for this is as follows: In order that content of a register having an arbitrary number is supplied to an arbitrary calculation device, each register port of the register file needs the same number of circuits as that of the calculation devices, each of the circuits selecting a corresponding one of signal lines which are provided so that the number of the signal lines are equal to that of the registers of the register file.

US7069372 describes a processor for use in a router. The processor having a systolic array pipeline for processing data packets to determine to which output port of the router the data packet should be routed.

### Citation List

Patent Literature 1
   Japanese Patent Application Publication, Tokukaihei, No. 8-83264 A (Publication Date: March 26, 1996)
Patent Literature 2
   Japanese Patent Application Publication, Tokukai, No. 2001-312481 A (Publication Date: November 9, 2001)
Patent Literature 3
   Japanese Patent Application Publication, Tokukai, No. 2003-76668 A (Publication Date: March 14, 2003)

### Summary of Invention

### Technical Problem

As described above, although the conventional VLIW technique can make use of rich program assets, the conventional VLIW technique has a problem that it cannot concurrently execute more than several instructions.

Furthermore, the conventional VLIW technique also involves the following problem: Even in a case where many instructions can be determined in advance to be executable in parallel, the number of instructions concurrently executable cannot be increased due to the limited number of register ports.

In view of the foregoing problems, an object of the present invention is to provide a data processing device which is capable of executing an increased number of instructions in parallel.

### Solution to Problem

In order to attain the above object, a data processing device of the present invention is as described in claim 1.

According to the above data processing device, the pieces of data of the first registers in the first register file section are transferred to their corresponding second registers in the second register file section.

Therefore, even in a case where the pieces of data of the first registers in the first register file section are used by the first calculation section to execute a calculation, the second calculation section can read the pieces of data from the second registers in the second register file section and use them to execute a calculation.

Furthermore, according to the above configuration, the result of the calculation executed by the first calculation section is transferred to the second calculation section.

Therefore, immediately after the first calculation section finishes the calculation, the second calculation section can use the result of the calculation executed by the first calculation section, in order to execute a calculation.

holding section, and the second calculation section executing a calculation by use of at least either one of (i) pieces of data read from the second registers in the second register file section and (ii) the result of the calculation transferred from the first holding section.

According to the above data processing device, the pieces of data of the first registers in the first register file section are transferred to their corresponding second registers in the second register file section.

Therefore, even in a case where the pieces of data of the first registers in the first register file section are used by the first calculation section to execute a calculation, the second calculation section can read the pieces of data from the second registers in the second register file section and use them to execute a calculation.

Furthermore, according to the above configuration, the result of the calculation executed by the first calculation section is transferred to the second calculation section.

Therefore, immediately after the first calculation section finishes the calculation, the second calculation section can use the result of the calculation executed by the first calculation section, in order to execute a calculation.

Consequently, the above data processing device allows the first and second calculation sections to execute two calculations in parallel.

### Advantageous Effects of Invention

As described above, a data processing device of the present invention is as described in claim 1.

Consequently, the present invention provides an effect of making it possible to execute an increased number of instructions in parallel.

### Brief Description of Drawings

Fig. 1

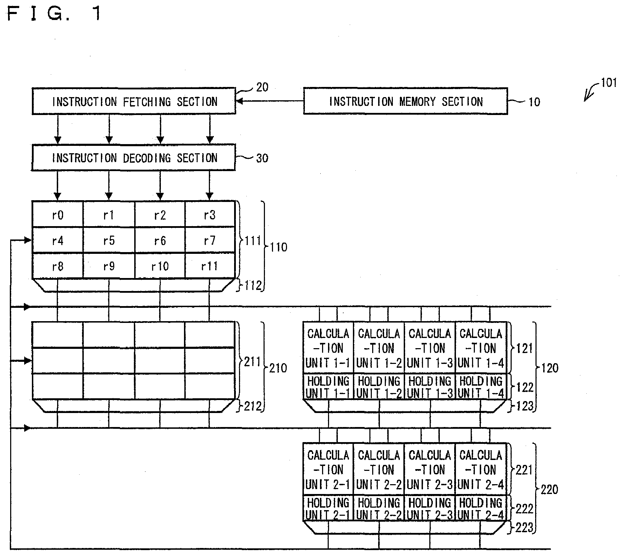

   Fig. 1 is a view illustrating a configuration of a data processing device.
Fig. 2

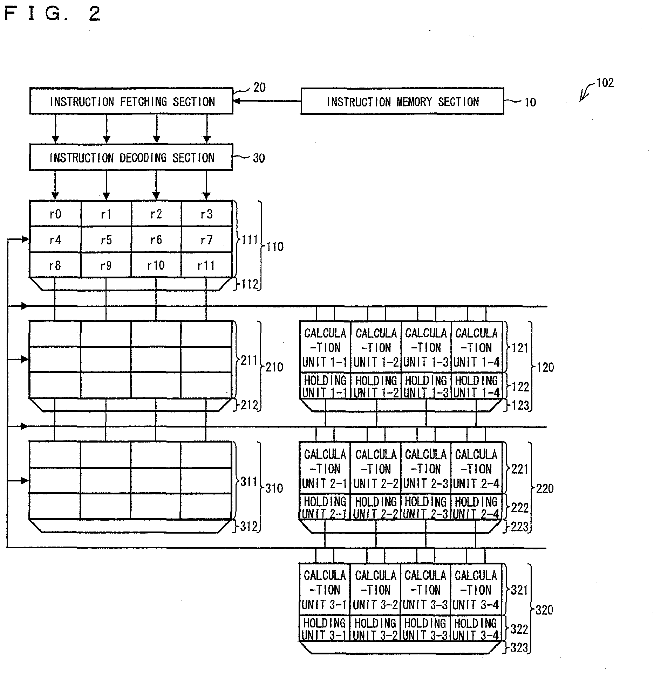

   Fig. 2 is a view illustrating a configuration of a data processing device of an embodiment of the present invention.
   Fig. 3

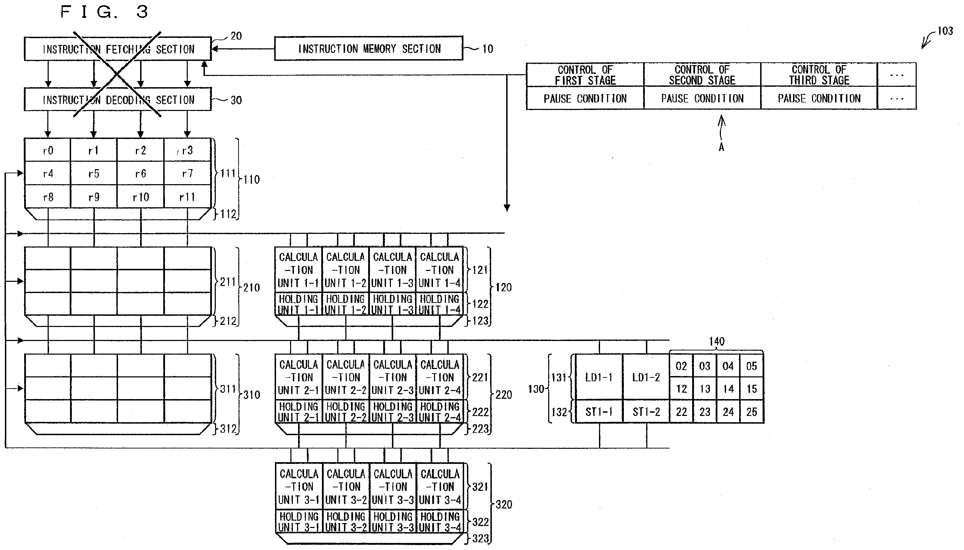

Fig. 3 is a view illustrating a configuration of a data processing device of another embodiment of the present invention.
Fig. 4

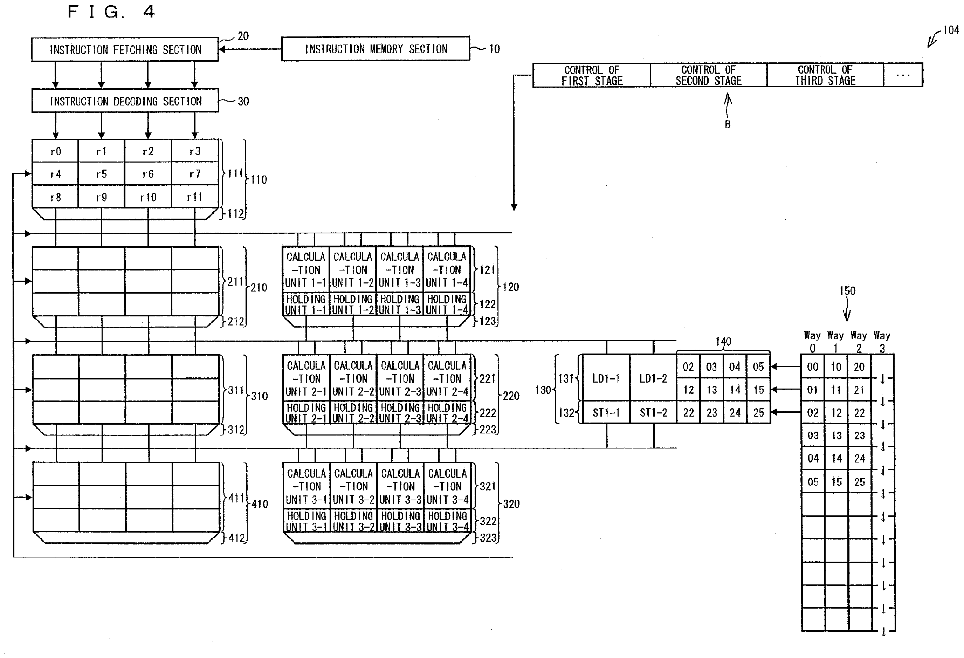

   Fig. 4 is a view illustrating a configuration of a data processing device of another embodiment of the present invention.
Fig. 5

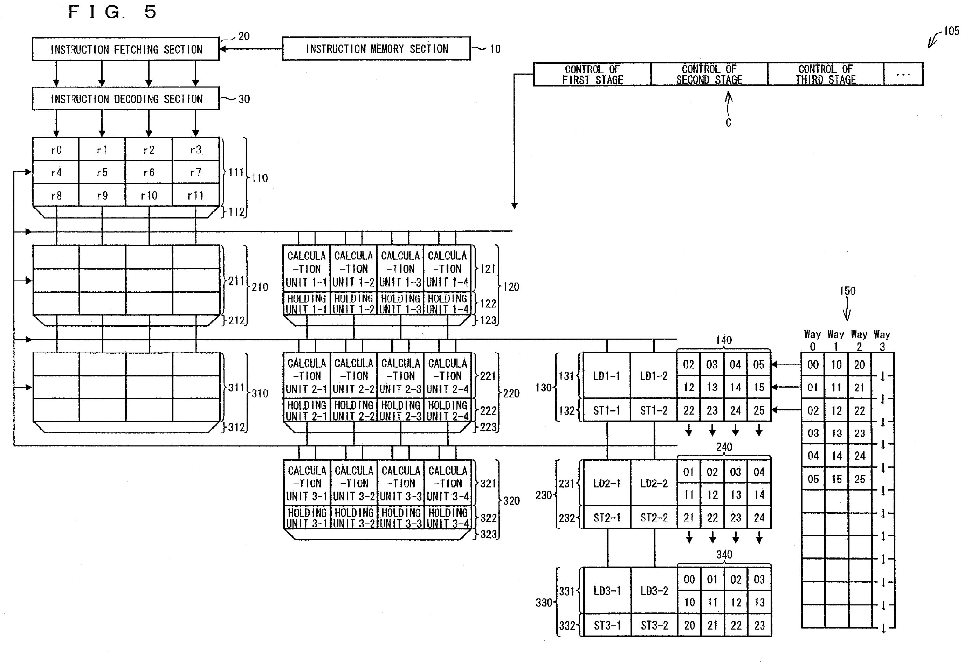

   Fig. 5 is a view illustrating a configuration of a data processing device of another embodiment of the present invention.
Fig. 6

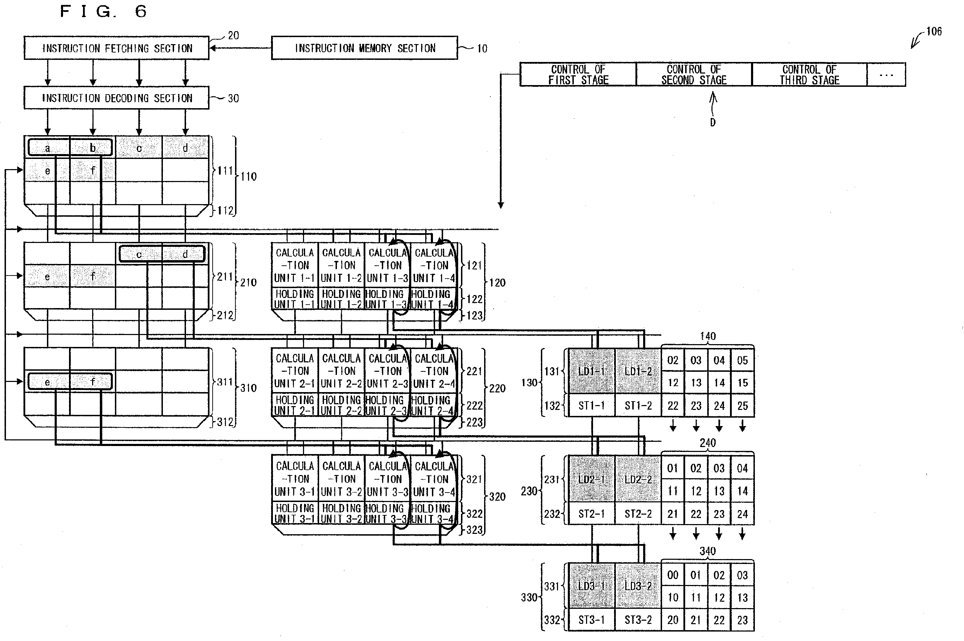

   Fig. 6 is a view illustrating a configuration of a data processing device of another embodiment of the present invention.
Fig. 7

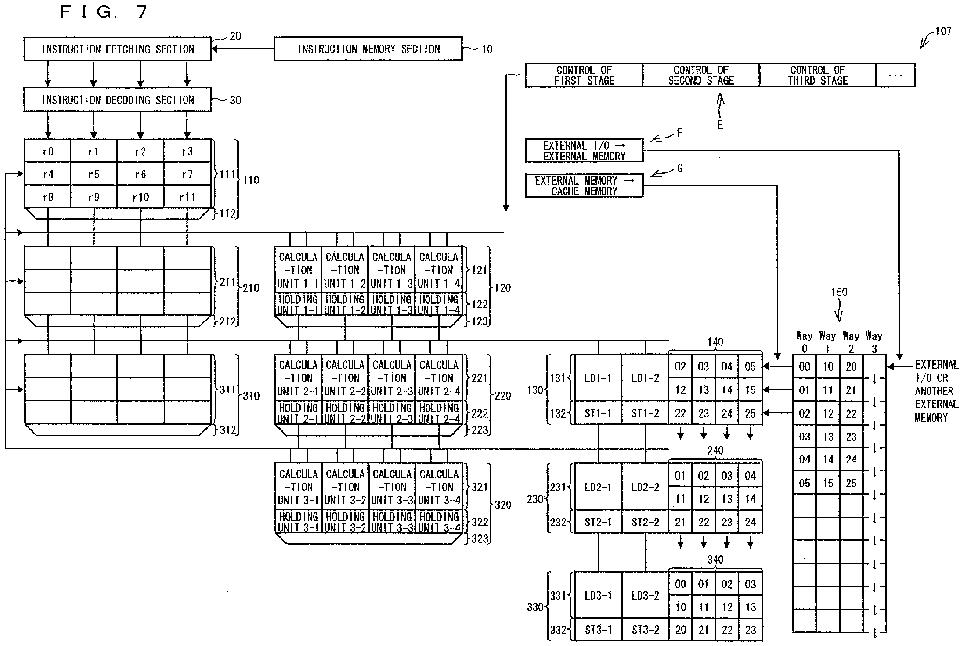

   Fig. 7 is a view illustrating a configuration of a data processing device of another embodiment of the present invention.
Fig. 8

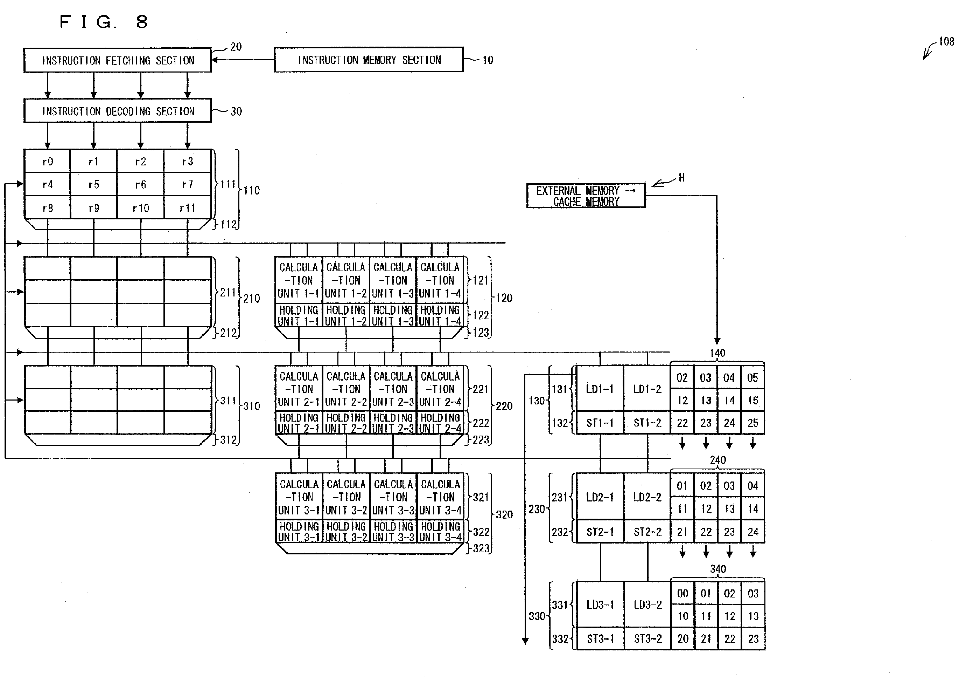

   Fig. 8 is a view illustrating a configuration of a data processing device of another embodiment of the present invention.
Fig. 9

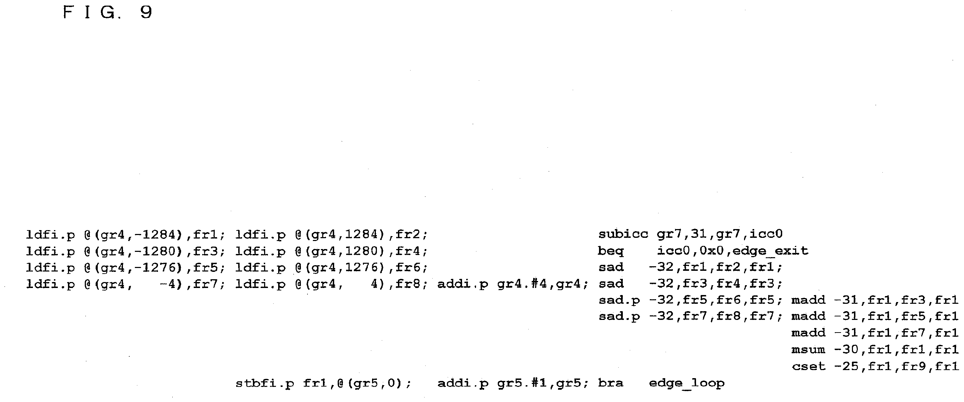

   Fig. 9 is an explanatory view for illustrating instruction code.
Fig. 10

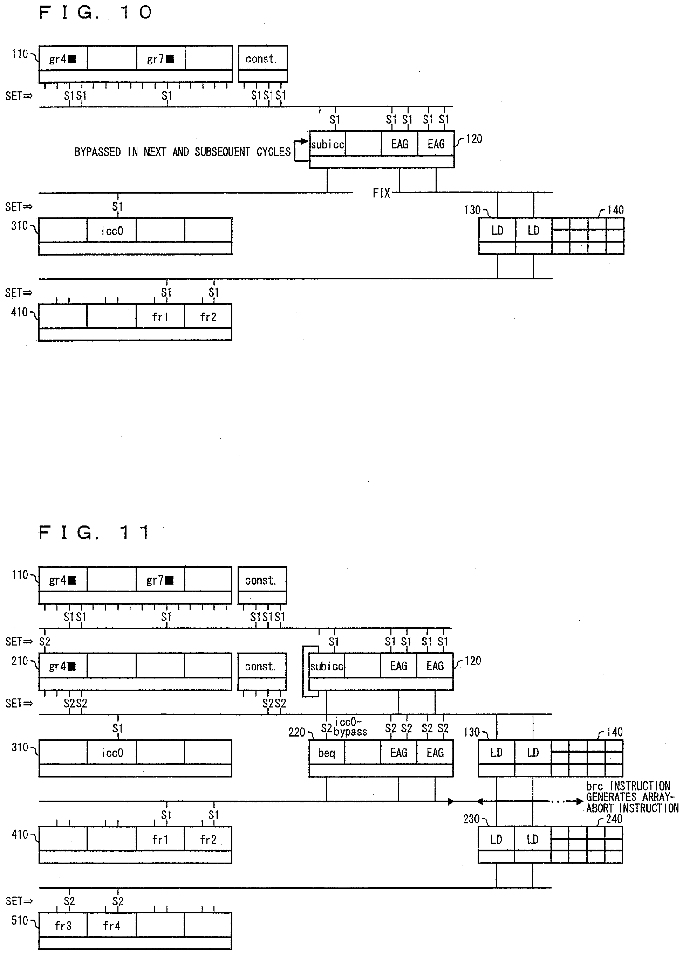

   Fig. 10 is a view for illustrating how an operation is performed according to a data processing method of another embodiment of the present invention (#1).
Fig. 11
   Fig. 11 is a view for illustrating how an operation is performed according to the data processing method of the another embodiment of the present invention (#2).
Fig. 12

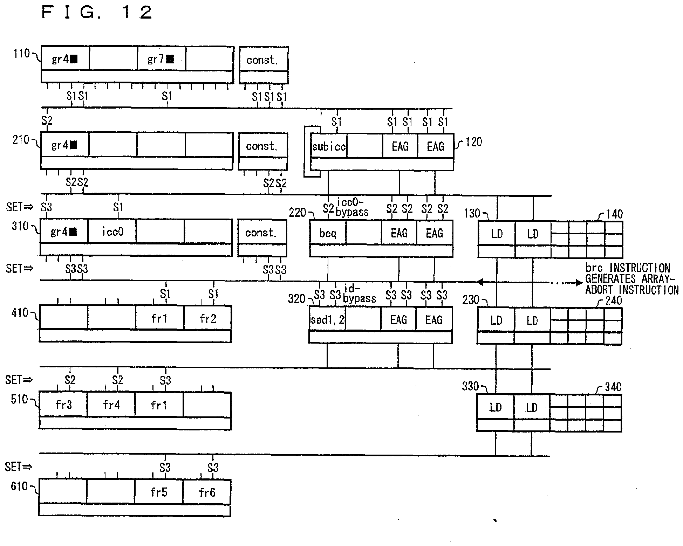

   Fig. 12 is a view for illustrating how an operation is performed according to the data processing method of the another embodiment of the present invention (#3).
Fig. 13

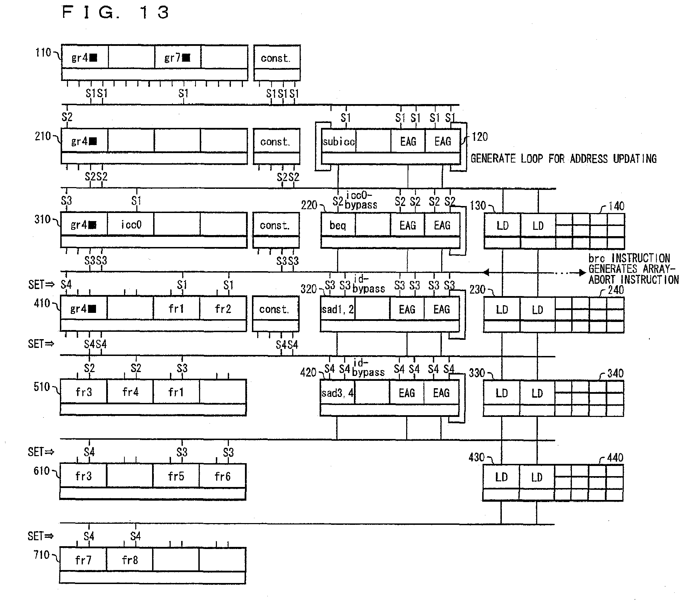

   Fig. 13 is a view for illustrating how an operation is performed according to the data processing method of the another embodiment of the present invention (#4).
Fig. 14

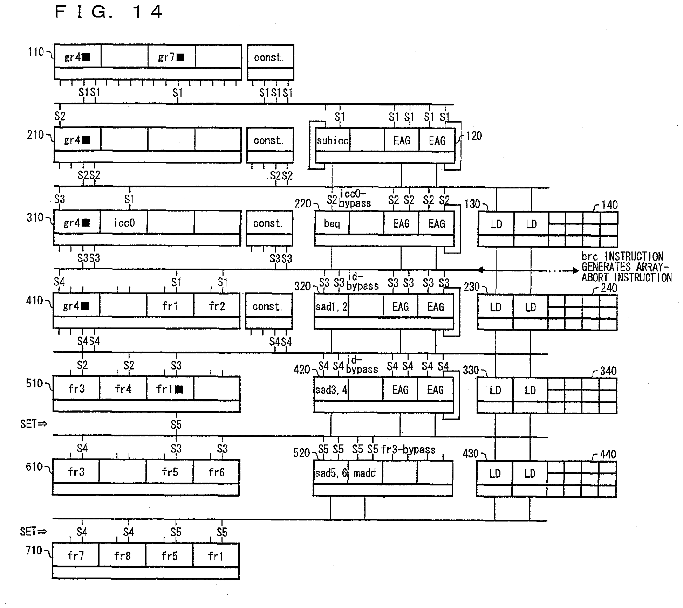

   Fig. 14 is a view for illustrating how an operation is performed according to the data processing method of the another embodiment of the present invention (#5).
Fig. 15

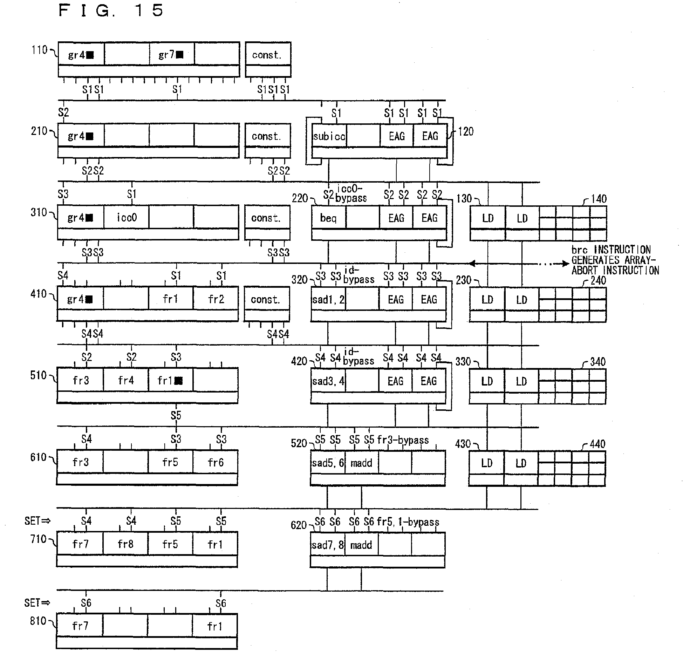

   Fig. 15 is a view for illustrating how an operation is performed according to the data processing method of the another embodiment of the present invention (#6).
Fig. 16

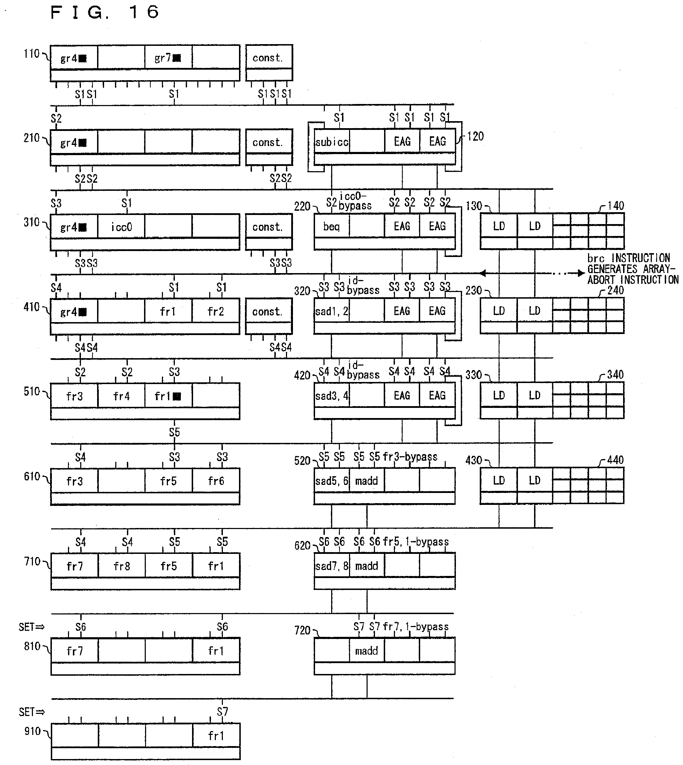

   Fig. 16 is a view for illustrating how an operation is performed according to the data processing method of the another embodiment of the present invention (#7).
Fig. 17

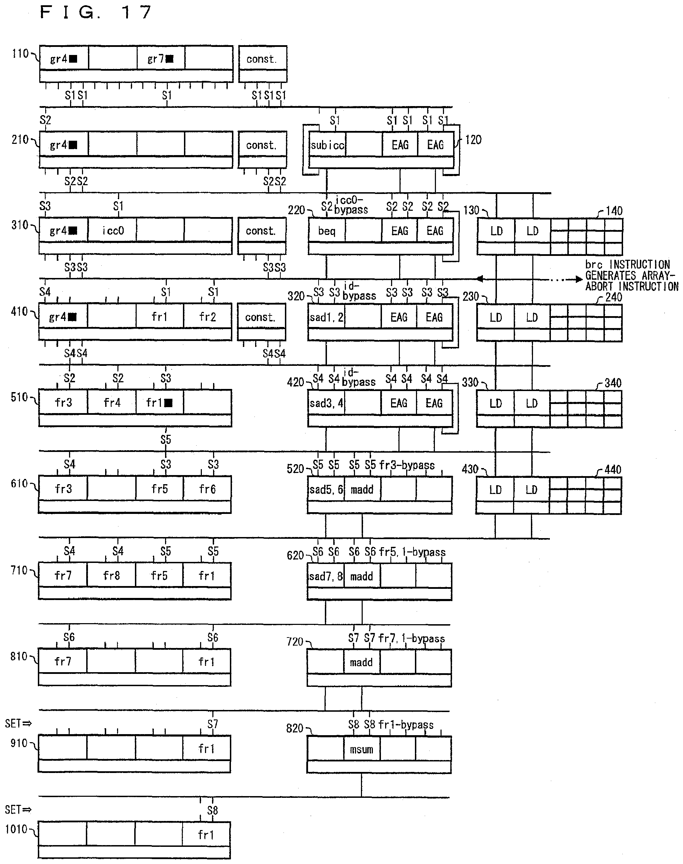

   Fig. 17 is a view for illustrating how an operation is performed according to the data processing method of the another embodiment of the present invention (#8).
Fig. 18

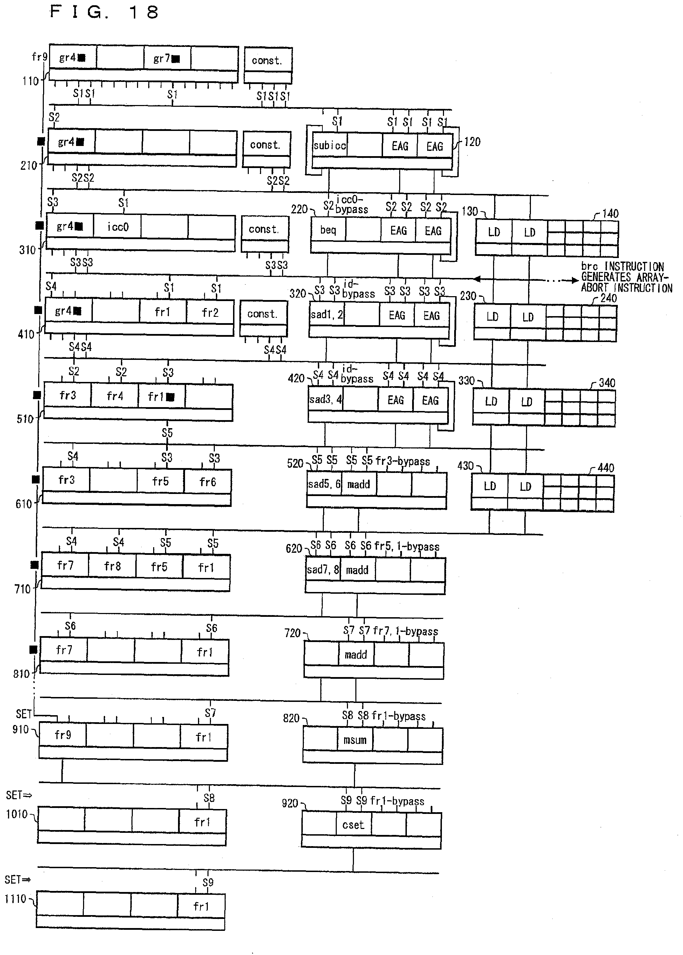

   Fig. 18 is a view for illustrating how an operation is performed according to the data processing method of the another embodiment of the present invention (#9).
Fig. 19

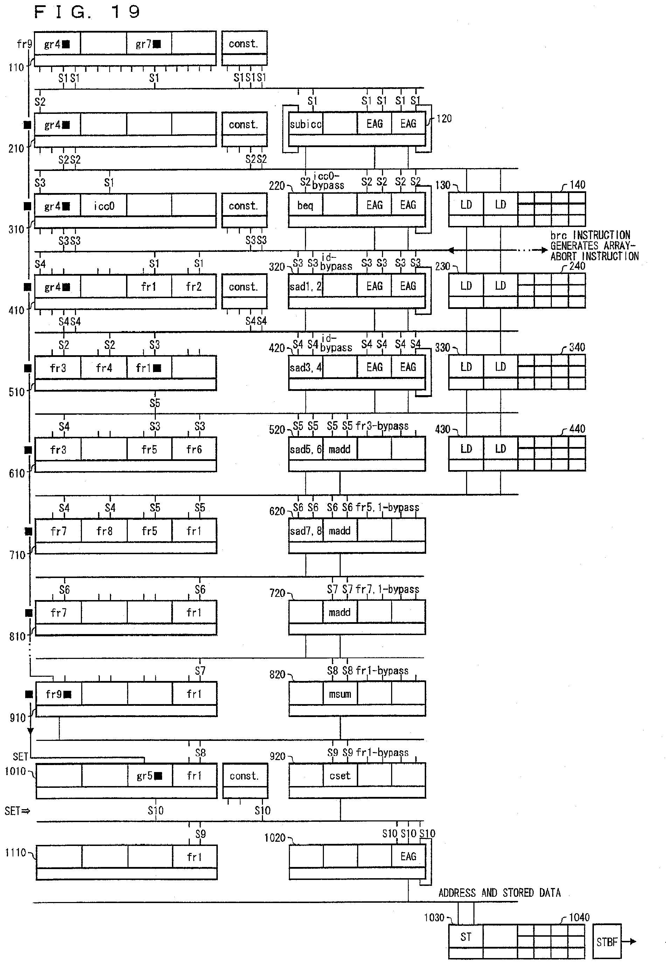

   Fig. 19 is a view for illustrating how an operation is performed according to the data processing method of the another embodiment of the present invention (#10).
Fig. 20

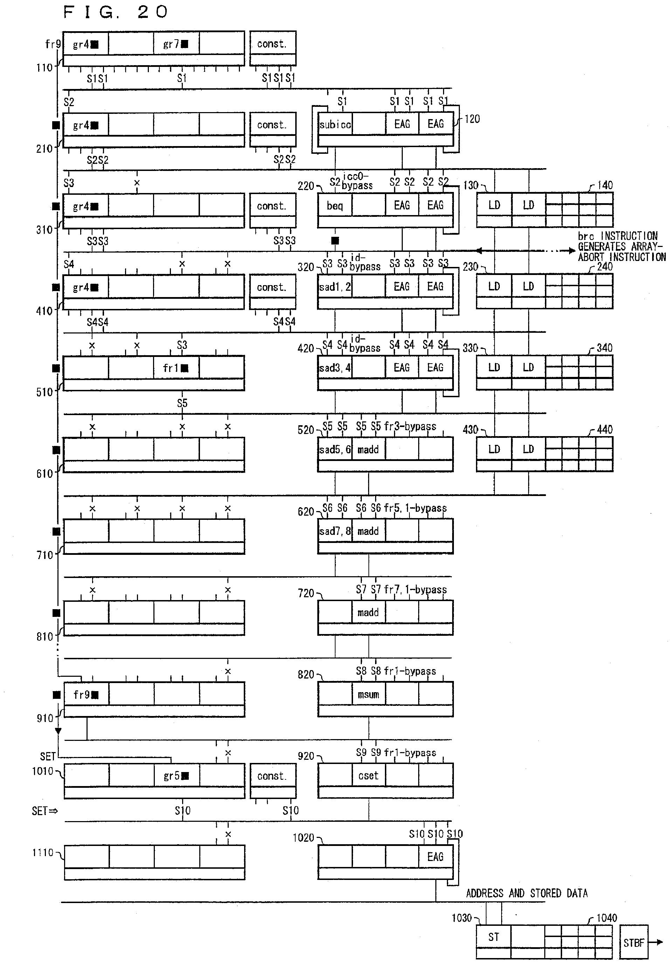

   Fig. 20 is a view for illustrating how an operation is performed according to the data processing method of the another embodiment of the present invention (#11).

### Description of Embodiments

The following will describe embodiments of the present invention with reference to drawings. In the drawing used in the following descriptions, the same elements are given the same reference signs. The elements with the same reference signs have the same names and functions. Therefore, detailed descriptions of such the elements will not be repeated.

First, Embodiments 1 through 9 deal with configurations of data processing devices of the present invention. Next, Embodiment 10 deals with how an operation is performed according to a data processing method of the present invention.

Fig. 1 is a view illustrating a configuration of a data processing device.

As shown in Fig. 1, a data processing device 101 includes an instruction memory section 10, an instruction fetching section (instruction fetching/decoding section) 20, an instruction decoding section (instruction fetching/decoding section) 30, a first register file section 110, a second register file section 210, a first calculation device (first calculation section, first holding section) 120, and a second calculation device (second calculation section, second holding section) 220.

The instruction memory section 10 may be any of publicly-known storage devices such as magnetic disk devices (e.g., a hard disc drive) and semiconductor memories. The instruction memory section 10 holds a program including a plurality of instructions. The instruction memory section 10 may be a part of a main memory, or may be an instruction buffer for holding a part of data of the main memory.

The instruction fetching section 20 fetches a necessary instruction from the instruction memory section 10, and the instruction decoding section 30 decodes the fetched instruction. Based on the result of the decoding performed by the instruction decoding section 30, a process to be performed in the first calculation device 120 and the second calculation device 220 is determined.

The data processing device 101 of the present embodiment assumes a processor architecture according to the publicly-known VLIW technique. It is assumed that (i) the instruction fetching section 20 fetches at a time, e.g., four instructions each having a width of, e.g., 32 bit, and (ii) the instruction decoding section 30 decodes at a time the fetched instructions.

The first register file section 110 holds data necessary for the first calculation device 120 to perform a calculation process. The first register file section 110 includes (i) a register group 111 including a plurality of registers (first registers) r0 through r11 and (ii) a transferring unit 112 for transferring, to the outside of the first register file section 110, pieces of data read from the registers r0 through r11 in the register group 111.

Reading/writing data from/to the registers r0 through r11 in the register group 111 is executed based on the result of the decoding performed by the instruction decoding section 30. The reading/writing data from/to the registers r0 through r11 in the register group 111 is performed by use of their respective register numbers 0 through 11 as keys of access.

When a register number for reading is designated, the transferring unit 112 transfers, to the outside of the first register file section 110, data that is held by a register having the designated register number.

The second register file section 210 holds data necessary for the second calculation device 220 to perform a calculation process. The second register file section 210 includes (i) a register group 211 including a plurality of registers (second registers) r0 through r11 and (ii) a transferring unit 212 for transferring, to the outside of the second register file section 210, pieces of data read from the registers r0 through r11 in the register group 211.

Reading/writing data from/to the registers r0 through r11 in the register group 211 is executed based on the result of the decoding performed by the instruction decoding section 30. The reading/writing data from/to the registers r0 through r11 in the register group 211 is performed by use of their respective register numbers 0 through 11 as keys of access.

The registers r0 through r11 in the register group 211 are associated in a one-to-one relationship with the registers r0 through r11 in the register group 111 of the first register file section 110. The registers in the register group 111 and the registers in the register group 211 are associated with each other so that each pair of registers associated with each other has the same register number. Further, the transferring unit 112 of the first register file section 110 can transfer data read from each of the registers r0 through r11 in the register group 111 to a respective one of the registers r0 through r11 in the register group 211 of the second register file section 210, said each of the registers r0 through r11 in the register group 111 and the respective one of the registers r0 through r11 in the register group 211 having the same register number. For example, the transferring unit 112 of the first register file section 110 can transmit data read from the register r3 in the register group 111 to the register r3 in the register group 211 of the second register file section 210. Further, the transferring unit 112 of the first register file section 110 can transmit data read from the register r9 in the register group 111 to the register r9 in the register group 211 of the second register file section 210.

When a register number for reading is designated, the transferring unit 212 transfers, to the outside of the second register file section 210, data held by a register having the designated register number.

The first calculation device 120 performs a substantive process of the data processing device 101. The first calculation device 120 includes (i) a calculation unit group 121 including calculation units 1-1 through 1-4, (ii) a holding unit group 122 including holding units 1-1 through 1-4, and (iii) a transferring unit 123.

The first calculation device 120 constitutes a first data processing stage, in combination with the first register file section 110. The transferring unit 112 of the first register file section 110 can transfer, to the first calculation device 120, pieces of data read from the registers r0 through r11 in the register group 111. Further, each of the calculation units 1-1 through 1-4 in the calculation unit group 121 of the first calculation device 120 obtains two of the pieces of data read from the registers r0 through r11 of the first register file section 110, and executes any of various kinds of calculation processes such as four arithmetic operations and logical operations by using the two pieces of data thus obtained. Calculation processes of the respective calculation units 1-1 through 1-4 are executed concurrently.

The holding units 1-1 through 1-4 in the holding unit group 122 store results of calculations performed by their corresponding calculation units 1-1 through 1-4. The holding units 1-1 through 1-4 are associated in a one-to-one relationship with the calculation units 1-1 through 1-4.

The transferring unit 123 transfers, to the outside of the first calculation device 120, the results of the calculations performed by the calculation units 1-1 through 1-4, which results are stored in the respective holding units 1-1 through 1-4.

The second calculation device 220 performs a substantive process of the data processing device 101. The second calculation device 220 includes (i) a calculation unit group 221 including calculation units 2-1 through 2-4, (ii) a holding unit group 222 including holding units 2-1 through 2-4, and (iii) a transferring unit 223.

The second calculation device 220 constitutes a second data processing stage, in combination with the second register file section 210. The transferring unit 212 of the second register file section 210 can transfer, to the second calculation device 220, pieces of data read from the registers r0 through r11 in the register group 211. Further, each of the calculation units 2-1 through 2-4 in the calculation unit group 221 of the second calculation device 220 obtains two of the pieces of data read from the registers r0 through r11 of the second register file section 210, and executes any of various kinds of calculation processes such as four arithmetic operations and logical operations by using the two pieces of data thus obtained. Calculation processes of the respective calculation units 2-1 through 2-4 are executed concurrently.

Furthermore, the calculation units 2-1 through 2-4 in the calculation unit group 221 of the second calculation device 220 can obtain the results of the calculations stored in the holding units 1-1 through 1-4 in the holding unit group 122 of the first calculation device 120. The transferring unit 123 of the first calculation device 120 can transfer, to the second calculation device 220, the results of the calculations performed by the calculation units 1-1 through 1-4, which results are stored in the respective holding units 1-1 through 1-4.

In addition, the calculation units 2-1 through 2-4 of the second calculation device 220 can execute calculation processes by using the results of the calculations performed by the calculation units 1-1 through 1-4, instead of the pieces of data read from the registers r0 through r11 of the second register file section 210.

The holding units 2-1 through 2-4 in the holding unit group 222 store results of calculations performed by their corresponding calculation units 2-1 through 2-4. The holding units 2-1 through 2-4 are associated in a one-to-one relationship with the calculation units 2-1 through 2-4.

The transferring unit 223 transfers, to the outside of the second calculation device 220, the results of the calculations performed by the calculation units 2-1 through 2-4, which results are stored in the respective holding units 2-1 through 2-4.

Next, the following will describe how the data processing device 101 operates.

According to the data processing device 101 the first calculation device 120 performs a calculation process by use of pieces of data read from the registers r0 through r11 in the register group 111.

At the same time that the first calculation device 120 performs the calculation process, the pieces of data read from the registers r0 through r11 in the register group 111, which were not the subject of the calculation process by the first calculation device 120, are transferred to the second register file section 210.

Then, in the next cycle, by use of the pieces of data transferred to the registers r0 through r11 in the register group 211 of the second register file section 210, the second calculation device 220 performs a calculation process.

At the same time that the second calculation device 220 performs the calculation process, the first calculation device 120 performs a calculation process by use of pieces of data read from the registers r0 through r11 in the register group 111.

Furthermore, in a case where the second calculation device 220 requires a result of the calculation performed by the first calculation device 120, the transferring unit 123 of the first calculation device 120 transfers, to the second calculation device 220, results of calculations performed by the calculation units 1-1 through 1-4, which results are stored in the respective holding units 1-1 through 1-4.

### (Embodiment 1)

Next, the following will describe Embodiment 1 of the present invention. Fig. 2 is a view illustrating a configuration of a data processing device according to Embodiment 1 of the present invention. In the following descriptions, the same parts as those in previous example of a data processing device 101 are given the same reference signs, and detailed explanations thereof are omitted.

As shown in Fig. 2, a data processing device 102 of the present embodiment differs from the data processing device 101 in the following point: The data processing device 102 of the present embodiment further includes a third register file section 310 and a third calculation device (third calculation section, third holding section) 320. With this configuration, the data processing device 102 of the present embodiment concurrently executes not only a calculation process by a first calculation device 120 and a calculation process by a second calculation device 220 but also a calculation process by the third calculation device 320.

The third register file section 310 holds data necessary for the third calculation device 320 to perform a calculation process. The third register file section 310 includes (i) a register group 311 including a plurality of registers (third registers) r0 through r11 and (ii) a transferring unit 312 for transferring, to the outside of the third register file section 310, pieces of data read from the registers r0 through r11 in the register group 311.

Reading/writing data from/to the registers r0 through r11 in the register group 311 is executed based on a result of decoding performed by an instruction decoding section 30. The reading/writing data from/to the registers r0 through r11 in the register group 311 is performed by use of their respective register numbers 0 through 11 as keys of access.

The registers r0 through r11 in the register group 311 are associated in a one-to-one relationship with registers r0 through r11 in a register group 211 of a second register file section 210. The registers in the register group 211 and the registers in the register group 311 are associated with each other so that each pair of registers associated with each other has the same register number. Further, a transferring unit 212 of the second register file section 210 can transfer data read from each of the registers r0 through r11 in the register group 211 to a respective one of the registers r0 through r11 in the register group 311 of the third register file section 310, said each of the registers r0 through r11 in the register group 211 and the respective one of the registers r0 through r11 in the register group 311 having the same register number.

When a register number for reading is designated, the transferring unit 312 transfers, to the outside of the third register file section 310, data held by a register having the designated register number.

Further, the third register file section 310 can obtain, via a transferring unit 123 of a first calculation device 120, results of calculations performed by calculation units 1-1 through 1-4, which results are stored in respective holding units 1-1 through 1-4 of the first calculation device 120.

The third calculation device 320 performs a substantive process of the data processing device 102. The third calculation device 320 includes (i) a calculation unit group 321 including calculation units 3-1 through 3-4, (ii) a holding unit group 322 including holding units 3-1 through 3-4, and (iii) a transferring unit 323.

The third calculation device 320 constitutes a third data processing stage, in combination with the third register file section 310. The transferring unit 312 of the third register file section 310 can transfer, to the third calculation device 320, pieces of data read from the registers r0 through r11 in the register group 311. Further, each of the calculation units 3-1 through 3-4 in the calculation unit group 321 of the third calculation device 320 obtains two of the pieces of data read from the registers r0 through r11 in the third register file section 310, and executes any of various kinds of calculation processes such as four arithmetic operations and logical operations by using the two pieces of data thus obtained. Calculation processes of the respective calculation units 3-1 through 3-4 are executed concurrently.

The holding units 3-1 through 3-4 in the holding unit group 322 store results of calculations performed by their corresponding calculation units 3-1 through 3-4. The holding units 3-1 through 3-4 are associated in a one-to-one relationship with the calculation units 3-1 through 3-4.

The transferring unit 323 transfers, to the outside of the third calculation device 320, the results of the calculations performed by the calculation units 3-1 through 3-4, which results are stored in the respective holding units 3-1 through 3-4.

The third calculation device 320 can obtain, via a transferring unit 223 of the second calculation device 220, results of calculations performed by calculation units 2-1 through 2-4, which results are stored in respective holding units 2-1 through 2-4 of the second calculation device 220.

Next, the following will describe how the data processing device 102 of the present embodiment operates.

According to the data processing device 102 of the present embodiment, the second calculation device 220 performs a calculation process by use of pieces of data read from the registers r0 through r11 in the register group 211.

At the same time that the second calculation device 220 performs the calculation process, the pieces of data read from the registers r0 through r11 in the register group 211, which were not the subject of the calculation process by the second calculation device 220, are transferred to the third register file section 310.

Then, in the next cycle, by use of the pieces of data transferred to the registers r0 through r11 in the register group 311 of the third register file section 310, the third calculation device 320 performs a calculation process.

At the same time that the third calculation device 320 performs the calculation process, the second calculation device 220 performs a calculation process by use of pieces of data read from the registers r0 through r11 in the register group 211.

Furthermore, in a case where the third calculation device 320 requires a result of the calculation performed by the second calculation device 120, the transferring unit 223 of the second calculation device 220 transfers, to the third calculation device 320, results of calculations performed by the calculation units 2-1 through 2-4, which results are stored in the respective holding units 2-1 through 2-4.

In a case where (i) the second calculation device 220 does not require a result of a calculation performed by the first calculation device 120 but (ii) the third calculation device 320 requires the result of the calculation performed by the first calculation device 120, the result of the calculation performed by the first calculation device 120 is stored in the third register file section, so as to be indirectly put in the third calculation device 320.

### (Embodiment 2)

Next, the following will describe Embodiment 2 of the present embodiment. Embodiment 2 of the present invention is made in such a manner that the configuration of the data processing device 102 of Embodiment 1, which includes three data processing stages, first through third data processing stages, is modified so as to be expanded to a configuration including N data processing stages.

For example, assume that N is an integer of 1 or greater. In this case, in a case where a result of a calculation performed by a calculation device constituting an Nth data processing stage is used by at least one of calculation devices in (N+2)th and subsequent data processing stages, the result of the calculation is written into a register file section of the (N+2)th data processing stage.

On the other hand, in a case where the result of the calculation is not used by any of the calculation devices of the (N+2)th and subsequent data processing stages, the result of the calculation is inputted into a calculation device of an (N+1)th data processing stage, and is not written into the register file section of the (N+2)th data processing stage.

As described above, according to the data processing device of the present embodiment, in a case where a result of a calculation performed by a calculation device of a preceding stage is used only by a calculation device of a following stage which follows the preceding stage, the result of the calculation does not need to be written into a register file section of the following stage. Thus, in a case where the result of the calculation performed by the calculation device of the preceding stage is used only by the calculation device of the following stage, it is possible to omit data transmission between the register file sections of the preceding and following stages.

### (Embodiment 3)

The following will describe Embodiment 3 of the present invention. Fig. 3 is a view illustrating a configuration of a data processing device of Embodiment 3 of the present invention. In the following descriptions, the same parts as those in Embodiment 1 are given the same reference signs, and detailed explanations thereof are omitted.

As shown in Fig. 3, a data processing device 103 of the present embodiment differs from the data processing device 102 of Embodiment 1 in the following point: The data processing device 103 of the present embodiment further includes a first loading/storing section (loading section, storing section) 130 and a first cache memory 140. The first loading/storing section 130 and the first cache memory 140 constitute a first data processing stage, in combination with a first calculation device 120 and a first register file section 110.

The first loading/storing section 130 includes (i) a loading section group 131 including loading sections (LD) 1-1 and 1-2 and (ii) a storing section group 132 including storing sections (ST) 1-1 and 1-2.

The first cache memory 140 is connected with the first loading/storing section 130. According to loading and storing operations by the first loading/storing section 130, the first cache memory 140 executes reading and writing at a high speed.

The first cache memory 140 needs to have an extremely small capacity in order to transmit, at a maximum, entire content thereof to next and subsequent stages. Therefore, the first cache memory 140 is made of a small-capacity cache memory, which is provided separately from a large-capacity cache memory being to be used during a non-array operation.

In this configuration, among content of the cache memory used during the non-array operation, a dirty line necessary for an array operation may be temporarily saved in an external memory (not illustrated), and thereafter the operation may be switched to the array operation using the first cache memory 140. This makes it possible to maintain consistency between (i) the content of the cache memory used during the non-array operation and (ii) the content of the first cache memory 140.

The data processing device of the present invention assumes a processor architecture according to the publicly-known VLIW technique. Therefore, a VLIW machine language instruction is typically executed by the first register file section 110, the first calculation device 120, the first loading/storing section 130, and the first cache memory 140. Namely, a calculation process operation according to the VLIW technique (hereinafter, also referred to as "non-array operation") is executed by the first register file section 110, the first calculation device 120, the first loading/storing section 130, and the first cache memory 140.

Therefore, register information necessary to start concurrent operation (hereinafter, also referred to as "array operation") of calculation processes by a plurality of calculation devices, which concurrent operation is described in Embodiment 1 through 3, is kept stored in the first register file section 110.

If an array operation start instruction (operation instruction) is detected as a result of decoding by the instruction decoding section 30, control information (setting information) A is set for a calculation device of each data processing stage. The control information A includes (i) a source register number indicative of a register number associated with a register storing data necessary for the calculation device to perform a calculation process, (ii) a type of a calculation which is to be performed by the calculation device in the calculation process, and (iii) a destination register number indicative of a register number associated with a register in which a result of the calculation performed by the calculation device is to be stored.

The control information A may be provided as additional information of the array operation start instruction. With this configuration, it is possible to obtain at once the pieces of control information A for the respective stages when decoding the array operation start instruction.

Further, the control information A may be supplied as a VLIW instruction string itself which is to be supplied following the array operation start instruction. With this configuration, the following operation is possible: After the array operation start instruction is decoded, the VLIW instruction following the array operation start instruction is decoded. Subsequently, until a backward branch instruction, which instructs to repeat a loop, is decoded (i.e., until an instruction for the final stage of the array operation is decoded), a forward branch instruction, which instructs to exit from the loop, is decoded (i.e., an instruction corresponding to a condition for putting the array operation to the end (operation end condition) is detected). Then, the forward branch instruction is set as a pause condition. Thus, it is possible to reduce control information which is to be added to the existing instruction string.

In this operation, assume that pieces of data necessary for the calculation devices to perform calculation processes are transmitted consecutively in such a manner that such a piece of data is transmitted to each stage from its precedent stage. In this case, it is not necessary to transmit the pieces of control information to the calculation devices of all the stages at a time. Rather, a piece of control information may be configured to arrive at a calculation device of each stage in sync with the first piece of data for the calculation device.

For example, one iteration of a loop structure is mapped to the calculation device network. Accordingly, once the array operation is started, pieces of data are consecutively supplied thereto, so that a large amount of data is processed.

Namely, during a period from start of an array operation to end of the array operation, the piece of control information for each calculation device needs not to be changed, and the instruction decoding section 30 needs not to execute the decoding operation, which decoding operation is necessary for the non-array operation. This makes it possible to stop the instruction decoding section 30, and also to stop a fetching operation which is to be performed by the instruction fetching section 20.

Furthermore, the control information A is configured to include an array operation end condition for stopping the array operation of the calculation devices of the stages. Accordingly, if the condition, which is set in advance, is satisfied during the array operation, the non-array operation is restored automatically.

Concrete examples of the array operation end condition encompass the number of execution cycles of the calculation device in each data processing stage.

### (Embodiment 4)

Next, the following will describe Embodiment 4 of the present invention. Fig. 4 is a view illustrating a configuration of a data processing device of Embodiment 4 of the present invention. In the following descriptions, the same parts as those in Embodiment 3 are given the same reference signs, and detailed explanations thereof are omitted.

As shown in Fig. 4, a data processing device 104 of the present embodiment differs from the data processing device 103 of Embodiment 3 in the following point: The data processing device 104 of the present embodiment further includes an external memory 150.

The external memory 150 is connected only with a first cache memory 140 of the first loading/storing section 130. To the second and subsequent stages, data of the first cache memory 140 is transmitted sequentially. This configuration simplifies connection between (i) the external memory 150 and (ii) cache memories of the respective data processing stages.

In response to a loading instruction, address information stored in a first register file section 110 is subjected to addition/subtraction by the first calculation device 120, so that an address is obtained. According to the address thus obtained, the first cache memory 140 is referred to, and pieces of data obtained are stored in storing sections 1-1 and 1-2 in a storing section group 132 of a first loading/storing section 130.

In the next cycle, the pieces of data stored in the storing sections 1-1 and 1-2 become an input to a calculation device or a register file section of its subsequent stage.

### (Embodiment 5)

Next, the following will describe Embodiment 6 of the present invention. Fig. 5 is a view illustrating a configuration of a data processing device of Embodiment 5 of the present invention. In the following descriptions, the same parts as those in Embodiment 4 are given the same reference signs, and detailed explanations thereof are omitted.

As shown in Fig. 5, a data processing device 105 of the present embodiment differs from the data processing device 104 of Embodiment 4 in the following point: The data processing device 105 of the present embodiment further includes a second loading/storing section 230, a third loading/storing section 330, a second cache memory 240, and a third cache memory 340. The second loading/storing section 230 and the second cache memory 240 constitute a second data processing stage, in combination with a second calculation device 220 and a second register file section 210. Further, the third loading/storing section 330 and the third cache memory 340 constitute a third data processing stage, in combination with a third calculation device 320 and a third register file section 310.

The second loading/storing section 230 includes (i) a loading section group 231 including loading sections (LD) 2-1 and 2-2 and (ii) a storing section group 232 including storing sections (ST) 2-1 and 2-2. Further, the third loading/storing section 330 includes (i) a loading section group 331 including loading sections (LD) 3-1 and 3-2 and (ii) a storing section group 332 including storing sections (ST) 3-1 and 3-2.

The second cache memory 240 is connected with the second loading/storing section 230. According to loading and storing operations by the second loading/storing section 230, the second cache memory 240 executes reading and writing at a high speed.

The third cache memory 340 is connected with the third loading/storing section 330. According to loading and storing operations by the third loading/storing section 330, the third cache memory 340 executes reading and writing at a high speed.

Similarly to the first cache memory 140, each of the second and third cache memories 240 and 340 needs to have an extremely small capacity in order to transmit, at a maximum, entire content thereof to next and subsequent stages. Therefore, each of the second and third cache memories 240 and 340 is made of a small-capacity cache memory, which is provided separately from a large-capacity cache memory being to be used during the non-array operation.

Note that, unlike the first cache memory 140, each of the second and third cache memories 240 and 340 is not provided with an interface for directly transmitting/receiving data to/from the external memory 150. Therefore, each of the second and third cache memories 240 and 340 indirectly receives, via a cache memory of its precedent stage, data from the first cache memory 140.

### (Embodiment 6)

Next, the following will describe Embodiment of the present invention. Fig. 6 is a view illustrating a configuration of a data processing device of Embodiment 6 of the present invention. In the following descriptions, the same parts as those in Embodiment 5 are given the same reference signs, and detailed explanations thereof are omitted.

Not only in a VLIW instruction but also in generally-used machine language instructions, a register number described in the instruction language would not be changed. Therefore, as in the above-described Embodiments 3 through 5, with the configuration in which the control information is set for each calculation device and the content of the register is supplied to each calculation device from its precedent stage, it is possible to consecutively obtain, by the array operation, the same calculation results as those originally intended by the VLIW machine language instruction.

Meanwhile, not only a VLIW instruction but also generally-used loading instructions have the following feature: With use of a loading address obtained from the content of the register, a cache memory is referred to. Thereafter, according to an instruction following the loading instruction, the content of the register is given an increment or a decrement, so that a different address is obtained. The different address is used to execute a next loading instruction.

In order that the same results as above are obtained consecutively by the array operation, the following configuration is necessary: A loading instruction for each stage gives an increment or a decrement in address information autonomously without waiting for a result of an instruction following the loading instruction, so that cache memories are consecutively referred to.

For this purpose, as shown in Fig. 6, a data processing device 106 of the present embodiment is configured as follows: A calculation device of each stage, which calculation device performs a calculation on a loading address, works out a next address by use of a result of a previous calculation.

Typically, the loading address is obtained by adding an offset to a value of a base register. In order to perform this addition, the value of the base register must be passed through a calculation unit of one stage. Further, an address which is to be used next is not a value obtained by adding another offset, but is a value obtained by adding a value corresponding to only a data width, e.g., four bytes. In order to increase the address in this way, a generally-used program executes, after executing the loading instruction, an instruction to increase the value of the base register by four.

However, if the present embodiment is configured such that a value of a register is increased in a following stage which follows a preceding stage and the result thereof is used in the preceding stage, it is impossible to efficiently control a data stream in one direction.

In view of this, as described above, according to the present embodiment, the value of the following stage is not returned to the preceding stage, but the preceding stage updates the base address autonomously.

Consequently, a loading/storing section of each stage does not wait for an execution result of its subsequent stage. This makes it possible to reduce a load on the loading/storing section of each stage.

### (Embodiment 7)

Next, the following will describe Embodiment 7 of the present invention. Fig. 7 is a view illustrating a configuration of a data processing device of Embodiment 7 of the present invention. In the following descriptions, the same parts as those in Embodiment 6 are given the same reference signs, and detailed explanations thereof are omitted.

As shown in Fig. 7, in a data processing device 107 of the present embodiment, a first cache memory 140 is connected with an external memory 150. The following describes how the data processing device 107 operates. For this, a contour extracting process, which is one of image processes, is described as an example.

The contour extracting process, which is one of image processes, is, for example, as follows: With respect to a 3 × 3 pixel region, differences between adjacent pixels in vertical, horizontal, and diagonal directions are found. If the sum thereof exceeds a threshold value, a contour is generated in a position corresponding to the center pixel. Typically, image data is transferred from an external I/O device to the external memory in the form of horizontally consecutive addresses. As a result, vertically consecutive pixels are made discrete as a memory address.

A cache memory of a conventional technique, which is designed for speeding-up, includes a memory whose speed is higher than that of an external memory and which stores a region corresponding to consecutive addresses of approximately 16 words, expecting that the region is reused many times. Therefore, in a case where vertically discrete addresses are often referred to, the above effect cannot be expected.

In view of this, the data processing device 107 of the present embodiment is configured such that image data of the external I/O device is stored in the external memory in the following manner: Expecting a high throughput by burst transfer, the data transfer is performed with consecutive addresses, based on transfer information F. The transfer information F includes (i) a base address of the external memory, which is the writing destination, and (ii) the number of transferred words (1024, in a case where an image has a width of 1024 words).

Meanwhile, the data processing device 107 of the present embodiment is configured so as to be capable of transferring data from the external memory to the first cache memory in the following manner: In order that pieces of data of vertically adjacent pixels are supplied to the calculation device every cycle, a plurality of short pieces of data (e.g., three words per cycle) belonging to different banks of the external memory are transferred to a plurality of lines of the cache memory per cycle, according to transfer information G. The transfer information G includes (i) a base address of the first cache memory, which is the writing destination, and (ii) a length of transferred data (in a case where the image has a width of 1024 words, a length corresponding to 1024 times of transfer of three words, one of which is in an upper position, another one of which is in a middle position, and the other one of which is in a lower position).

Such the transfer information is associated with an array operation start instruction, and is read out when the array operation start instruction is detected.

### (Embodiment 8)

Next, the following will describe Embodiment 8 of the present invention. Fig. 8 is a view illustrating a configuration of a data processing device of Embodiment 8 of the present invention. In the following descriptions, the same parts as those in Embodiment 7 are given the same reference signs, and detailed explanations thereof are omitted.

In the above-described Embodiment 8, there are two types of the data transfer information associated with the array operation start instruction; one is the transfer information transferred from the external I/O device to the external memory; and the other is the transfer information transferred from the external memory to the first cache memory.

Incidentally, for the transfer information transferred from the external memory to the first cache memory, such a mechanism is necessary by which the first cache memory and the first calculation device are synchronized with each other. The purpose of this is (i) to cause calculation devices of all stages to start operating concurrently at a timing that all pieces of necessary data are obtained by the first cache memory, i.e., at a timing that all pieces of data necessary for the second and subsequent loading/storing sections are confirmed to exist in the first cache memory and (ii) not to operate the calculation devices of all the stages while the pieces of necessary data do not exist in the first cache memory.

Therefore, in a data processing device 108 of the present embodiment, the above-described data transfer information additionally includes the number of times that loading should be performed before calculation devices start operating (SKIP information). At a time point when loading is completed the predetermined number of times, the calculation devices of the subsequent stages are caused to start operating.

After that, every time loading is completed, the calculation devices of the subsequent stages are operated. On the other hand, if loading is not completed due to, e.g., a delay occurred in the external memory, the subsequent stages are stopped.

Also in a case where a delay occurs when the final stage stores a result in the external memory and/or the external I/O device, the array operation is stopped temporarily, so as to wait for the data.

Once the number of times that loading is completed reaches the designated number of transferred words, the loading operation of the first stage is stopped, and only the subsequent stages are allowed to operate continuously. For example, at a timing that a counter of the final stage reaches a predetermined value, which counter counts up the number of calculations, the array operation may be stopped. This enables accurate control of the array operation.

### (Embodiment 9)

Next, the following will describe Embodiment 9 of the present invention.

A final result of the array operation is stored in the external memory or the external I/O device in response to a storing instruction. Alternatively, the final result may be stored in another external memory, so as to be used as an input to another N-stage structure connected with said another external memory. This makes it possible to consecutively perform plural kinds of image processes.

Further, there may be a case where a process to be performed is complicated beyond the capacity of the number of array stages included in the hardware. In such a case, another array structure may be cascade-connected to the external memory, which serves as an interface, or the external memory may be directly connected with a first cache memory of another array structure, so that the number of stages of calculation devices is increased. With this, it is possible to deal with such the complicated process.

### (Embodiment 10)

The following will describe Embodiment 10 of the present invention. The present embodiment deals with how an operation is performed by a data processing method of the present invention.

The following explains how an inter-calculation unit network is set based on the instruction code shown in Fig. 9, according to the data processing method of the present invention. The explanation will be made by going through the instruction code step by step with reference to Figs. 10 through 20.

Assume that an array operation start instruction is detected in a machine language instruction which is followed by a loop structure. In this case, until the loop structure ends, i.e., until a backward branch instruction is detected, an instruction decoding function interprets machine language instructions in an ordinary manner, and stops an ordinary operation for controlling the first calculation device.

Further, the inter-calculation unit network necessary for the array operation is set up in accordance with the machine language instructions in the loop structure.

Fig. 10 shows the interpretation of the machine language instruction in the first line of the instruction code shown in Fig. 9. In Fig. 10, "S1" indicates locations where networks are set up in accordance with the instruction code in the first line.

The instruction code in the first line is made up of two loading instructions (ld) and one subtraction instruction (subicc).

In accordance with a first loading instruction (ld), (i) the content of a register (gr4) in a first register file section 110 and (ii) a constant (-1284) (const.) are added up. The sum thus obtained is used as a main memory address so that the first cache memory 140 is referred to. The value read out from the first cache memory 140 is stored in a register (fr1) in a fourth register file section 410.

As a calculation unit network for this, a setting is made so that the content of the register (gr4) in the first register file section 110 is first read out and inputted into a calculation unit (first EAG) belonging to a first calculation device 120. This setting is the same as that for a selection signal with respect to a generally-used selection circuit.

Further, the sum given by the first EAG is stored in the holding unit thereof. In the next cycle, the sum stored in the holding unit is transferred to a first loading/storing section 130.

The first EAG and each of a loading section and a storing section of the first loading/storing section 130 are connected with each other in a one-to-one relationship. Therefore, no input selection procedure is required for the first loading/storing section 130.

Further, a network is set up so that the sum transferred to the first loading/storing section 130 is written into the register (fr1) in the fourth register file section 410.

Similarly to the first loading instruction (ld), in accordance with a second loading instruction (ld), (i) the content of the register (gr4) in the first register file section 110 and (ii) a constant (1284) (const.) are added up. The sum thus obtained is used as a main memory address so that the first cache memory 140 is referred to. The value read out from the first cache memory 140 is stored in a register (fr2) in the fourth register file section 410.

As a calculation unit network for this, a setting is made so that the content of the register (gr4) in the first register file section 110 is first read out and inputted into a calculation unit (second EAG) belonging to the first calculation device 120.

Further, the sum given by the second EAG is stored in the holding unit thereof. In the next cycle, the sum stored in the holding unit is transferred to the first loading/storing section 130.

The second EAG and each of a loading section and a storing section of the first loading/storing section 130 are also connected with each other in a one-to-one relationship. Therefore, no input selection procedure is required for the first loading/storing section 130.

Further, a network is set up so that the sum transferred to the first loading/storing section 130 is written into the register (fr2) in the fourth register file section 410.

Note that the constant is stored in a constant area (const.) when the instruction is decoded.

A third subtraction instruction (subicc) instructs (i) subtraction of 1 from the content of a register (gr7) in the first register file section 110 and (ii) storing of the difference in the register (gr7).

As a calculation unit network for this, a network up to the first calculation device 120 is set up so that 1 is subtracted from the content of the register (gr7).

In order that subtraction is repeatedly performed, a network is set up so that in the next and subsequent cycles, an output of a calculation unit (subicc) belonging to the first calculation device 120 is used as an input, instead of the output of the register (gr7) belonging to the first register file section 110.

Consequently, the result of repeated subtractions (i.e., the later-described condition code) can be used to obtain the array operation end condition.

A network is set up so that the condition code resulting from the subtraction result is transferred to a register (icc0) in the third register file section 310.

Fig. 11 shows the interpretation of the machine language instruction in the second line of the instruction code shown in Fig. 9. In Fig. 11, "S2" indicates locations where networks are set up in accordance with the instruction code in the second line.

The instruction code in the second line is made up of two loading instructions (ld) and one conditional branch instruction (beq).

In accordance with a first loading instruction (ld), (i) the content of a register (gr4) in a second register file section 210 and (ii) a constant (-1280) (const.) are added up. The sum thus obtained is used as a main memory address so that a second cache memory 240 is referred to. The value read out from the second cache memory 240 is stored in a register (fr3) in a fifth register file section 510.

As a calculation unit network for this, a setting is made so that the content of the register (gr4) in the first register file section 110 is first transferred to the register (gr4) in the second register file section 210.

Then, a setting is made so that the content of the register (gr4) in the second register file section 210 is read out and inputted into a calculation unit (first EAG) belonging to a second calculation device 220.

Further, the sum given by the first EAG is stored in the holding unit thereof. In the next cycle, the sum stored in the holding unit is transferred to a second loading/storing section 230.

Further, a network is set up so that the sum transferred to the second loading/storing section 230 is written into the register (fr3) in the fifth register file section 510.

Similarly to the first loading instruction (ld), in accordance with a second loading instruction (ld), (i) the content of the register (gr4) in the second register file section 210 and (ii) a constant (1280) (const.) are added up. The sum thus obtained is used as a main memory address so that the second cache memory 240 is referred to. The value read out from the second cache memory 240 is stored in a register (fr4) belonging to the fifth register file section 510.

As a calculation unit network for this, a setting is made so that the content of the register (gr4) in the second register file section 210 is read out and inputted into a calculation unit (second EAG) belonging to the second calculation device 220.

Further, the sum given by the second EAG is stored in the holding unit thereof. In the next cycle, the sum stored in the holding unit is transferred to the second loading/storing section 230.

Then, a network is set up so that the sum transferred to the second loading/storing section 230 is written into the register (fr4) in the fifth register file section 510.

In a case where 0 is indicated by the condition code (icc0), which results from the execution result of the subtraction instruction (subicc) in the first line of the instruction code shown in Fig. 9, the conditional branch instruction (beq) serves as a machine language instruction for instructing the operation to be branched into an edge exit. During an ordinary operation which is not the array operation (i.e., during the non-array operation), the conditional branch instruction (beq) is executed as an ordinary conditional branch instruction.

Meanwhile, during the array operation, the condition code (icc0) is used as the "array operation end condition." In a case where the condition code (icc0) indicates that a subtraction result thereof is 0, the condition code serves as a trigger (ARRAY-ABORT signal) for bringing the array operation to the end and returning to the ordinary operation (non-array operation).

The condition code (icc0), which results from the result of execution of the subtraction instruction by the first calculation device 120, can be bypassed from the first calculation device 120 to the second calculation device 220. This ultimately eliminates the need for writing the condition code into a register (icc0) in a third register file section 310.

Fig. 12 shows the interpretation of the machine language instruction in the third line of the instruction code shown in Fig. 9. In Fig. 12, "S3" indicates locations where networks are set up in accordance with the instruction code in the third line.

The instruction code in the third line is made up of two loading instructions (ld) and one SAD instruction (sad).

In accordance with a first loading instruction (ld), (i) the content of a register (gr4) and (ii) a constant (-1276) (const.) are added up. The sum thus obtained is used as a main memory address so that the third cache memory 340 is referred to. The value read out from the third cache memory 340 is stored in a register (fr5).

As a calculation unit network for this, a setting is made so that the content of the register (gr4) in the second register file section 210 is first transferred to the register (gr4) in the third register file section 310.

Further, a setting is made so that the content of the register (gr4) in the third register file section 310 is read out and inputted into a calculation unit (first EAG) belonging to a third calculation device 320.

The sum given by the first EAG is stored in the holding unit thereof. In the next cycle, the sum stored in the holding unit is transferred to a third loading/storing section 330.

Then, a network is set up so that the sum transferred to the third loading/storing section 330 is written into a register (fr5) in a sixth register file section 610.

Similarly to the first loading instruction (ld), in accordance with a second loading instruction (ld), (i) the content of the register (gr4) in the third register file section 310 and (ii) a constant (1276) (const.) are added up. The sum thus obtained is used as a main memory address so that the third cache memory 340 is referred to. The value read out from the third cache memory 340 is stored in a register (fr6) in the sixth register file section 610.

As a calculation unit network for this, a setting is made so that the content of the register (gr4) in the third register file section 310 is read out and inputted into a calculation unit (second EAG) belonging to the third calculation device 320.

Further, the sum given by the second EAG is stored in the holding unit thereof. In the next cycle, the sum stored in the holding unit is transferred to the third loading/storing section 330.

Then, a network is set up so that the sum transferred to the third loading/storing section 330 is written into the register (fr6) in the sixth register file section 610.

The SAD instruction (sad) is a machine language instruction for instructing (i) finding of a sum of byte-by-byte absolute differences between the pieces of content of the registers (fr1, fr2) in the fourth register file section 410 which pieces of content have been loaded by the first loading/storing section 130, and (ii) writing of the sum into a register (fr1) in the fifth register file section 510.

The use of the bypass between the first loading/storing section 130 and the third calculation device 320 allows the first loading/storing section 130 to write data into the registers (fr1, fr2) in the fourth register file section 410 concurrently with inputting (ld-bypass) the data into the third calculation device 320. This ultimately eliminates the need for reading data from the registers (fr1, fr2) in the fourth register file section 410.

Further, a calculation unit network is set up so that the result of the SAD instruction (sad) is written into the register (fr1) in the fifth register file section 510.

Fig. 13 shows the interpretation of the machine language instruction in the fourth line of the instruction code shown in Fig. 9. In Fig. 13, "S4" indicates locations where networks are set up in accordance with the instruction code in the fourth line.

The instruction code in the fourth line is made up of two loading instructions (ld), one addi instruction, and one SAD instruction (sad).

In accordance with a first loading instruction (ld), (i) the content of a register (gr4) and (ii) a constant (-4) (const.) are added up. The sum thus obtained is used as a main memory address so that the fourth cache memory 440 is referred to. The value read out from the fourth cache memory 440 is stored in a register (fr7) in a seventh register file section 710.

As a calculation unit network for this, a setting is made so that the content of the register (gr4) in the third register file section 310 is transferred to the register (gr4) in the fourth register file section 410.

Further, a setting is made so that the content of the register (gr4) in the fourth register file section 410 is read out and inputted into a calculation unit (first EAG) belonging to a fourth calculation device 420.

The sum given by the first EAG is stored in the holding unit thereof. In the next cycle, the sum stored in the holding unit is transferred to a fourth loading/storing section 430.

Further, a network is set up so that the sum transferred to the fourth loading/storing section 430 is written into the register (fr7) in the seventh register file section 710.

Similarly to the first loading instruction (ld), in accordance with a second loading instruction (ld), (i) the content of the register (gr4) in the third register file section 310 and (ii) a constant (4) (const.) are added up. The sum thus obtained is used as a main memory address so that the fourth cache memory 440 is referred to. The value read out from the fourth cache memory 440 is stored in a register (fr8) in the seventh register file section 710.

As a calculation unit network for this, a setting is made so that the content of the register (gr4) in the fourth register file section 410 is read out and inputted into a calculation unit (second EAG) belonging to the fourth calculation device 420.

Further, the sum given by the second EAG is stored in the holding unit thereof. In the next cycle, the sum stored in the holding unit is transferred to the fourth loading/storing section 430.

Further, a network is set up so that the sum transferred to the fourth loading/storing section 430 is written into a register (fr9) in the seventh register file section 710.

The SAD instruction (sad) is a machine language instruction for instructing (i) finding of a sum of byte-by-byte absolute differences between the pieces of content of the registers (fr3, fr4) in the fifth register file section 510 which pieces of content have been loaded by the second loading/storing section 230, and (ii) writing of the sum into a register (fr3) in the sixth register file section 610.

The use of the bypass between the second loading/storing section 230 and the fourth calculation device 420 allows the second loading/storing section 230 to write data into the registers (fr3, fr4) in the fifth register file section 510 concurrently with inputting (ld-bypass) the data into the fourth calculation device 420. This ultimately eliminates the need for reading data from the registers (fr3, fr4) in the fifth register file section 510.

Further, a calculation unit network is set up so that the result of the SAD instruction (sad) is written into the register (fr3) in the sixth register file section 610.

The addi instruction is a machine language instruction for instructing updating of the address of the register (gr4).

Upon detection of the addi instruction, feedback loops are generated for the first through fourth calculation devices 120 through 420, which are calculation devices utilizing the registers (gr4). The generation of the feedback loops automatically updates the load addresses of the first through fourth calculation devices 120 through 420.

Fig. 14 shows the interpretation of the machine language instruction in the fifth line of the instruction code shown in Fig. 9. In Fig. 14, "S5" indicates locations where networks are set up in accordance with the instruction code in the fifth line.

The instruction code in the fifth line is made up of one SAD instruction (sad) and one addition instruction (madd).

The SAD instruction (sad) is a machine language instruction for instructing (i) finding of a sum of byte-by-byte absolute differences between the pieces of content of the registers (fr5, fr6) in the sixth register file section 610 which pieces of content have been loaded by the third loading/storing section 330, and (ii) writing of the sum into a register (fr5) in the seventh register file section 710.

The use of the bypass between the third loading/storing section 330 and a fifth calculation device 520 allows the third loading/storing section 330 to write data into the registers (fr5, fr6) in the sixth register file section 610 concurrently with inputting (ld-bypass) the data into the fifth calculation device 520. This ultimately eliminates the need for reading data from the registers (fr5, fr6) in the sixth register file section 610.

Further, a calculation unit network is set up so that the result of the SAD instruction (sad) is written into the register (fr5) in the seventh register file section 710.

The addition instruction (madd) is a machine language instruction for instructing the results of the previous SAD instructions (sad) to be accumulated in the register (fr1) in the seventh register file section 710.

With regard to the register (fr1) in the fifth register file section 510, since no bypass is available between the fifth register file section 510 and the fifth calculation device 520, data is read out from the fifth register file section 510. With regard to the register (fr3) in the sixth register file section 610, the result of the latest calculation performed by the fourth calculation device 420 can be bypassed (fr3-bypass) so as to be inputted into the fifth calculation device 520.

A calculation unit network is set up so that the result of the calculation performed by the fifth calculation device 520 is stored in the register (fr1) in the seventh register file section 710.

Fig. 15 shows the interpretation of the machine language instruction in the sixth line of the instruction code shown in Fig. 9. In Fig. 15, "S6" indicates locations where networks are set up in accordance with the instruction code in the sixth line.

The instruction code in the sixth line is made up of one SAD instruction (sad) and one addition instruction (madd).

The SAD instruction (sad) is a machine language instruction for instructing (i) finding of a sum of byte-by-byte absolute differences between the pieces of content of the registers (fr7, fr8) in the seventh register file section 710 which pieces of content have been loaded by the fourth loading/storing section 430 and (ii) writing of the sum into a register (fr7) in an eighth register file section 810.

The use of the bypass between the fourth loading/storing section 430 and a sixth calculation device 620 allows the fourth loading/storing section 430 to write data into the registers (fr7, fr8) in the seventh register file section 710 concurrently with inputting (ld-bypass) the data into the sixth calculation device 620. This ultimately eliminates the need for reading data from the registers (fr7, fr8) in the seventh register file section 710.

Further, a calculation unit network is set up so that the result of the SAD instruction (sad) is written into the register (fr7) in the eighth register file section 810.

The addition instruction (madd) is a machine language instruction for instructing the results of the previous SAD instructions (sad) to be accumulated in a register (fr1) in the eighth register file section 810.

With regard to the registers (fr1, fr5) in the seventh register file section 710, the result of the latest calculation performed by the fifth calculation device 520 can be bypassed (fr5, 1-bypass) so as to be inputted into the sixth calculation device 620.

A calculation unit network is set up so that the result of the calculation performed by the sixth calculation device 620 is stored in the register (fr1) in the eighth register file section 810.

Fig. 16 shows the interpretation of the machine language instruction in the seventh line of the instruction code shown in Fig. 9. In Fig. 16, "S7" indicates locations where networks are set up in accordance with the instruction code in the seventh line.

The instruction code in the seventh line describes one addition instruction (madd).

The addition instruction (madd) is a machine language instruction for instructing the execution results of the previous SAD instructions (sad) to be accumulated in a register (fr1) in the ninth register file section 910.

With regard to the registers (fr1, fr7) in the eighth register file section 810, the result of the latest calculation performed by the sixth calculation device 620 can be bypassed (fr7, 1-bypass) so as to be inputted into a seventh calculation device 720.

A calculation unit network is set up so that the result of the calculation performed by the seventh calculation device 720 is stored in the register (fr1) in the ninths register file section 910.

Fig. 17 shows the interpretation of the machine language instruction in the eighth line of the instruction code shown in Fig. 9. In Fig. 17, "S8" indicates locations where networks are set up in accordance with the instruction code in the eighth line.

The instruction code in the eighth line describes one correction instruction (msum).

The correction instruction (msum) is an instruction for instructing results divided in the register (fr1) into a plurality of partial sums, (e.g., higher and lower partial sums) to be merged into one (i.e., an instruction for instructing the partial sums to be added up so that the sum thereof is obtained). There may be a case where, according to the SAD instruction (sad), it is difficult to find the sum of the absolute differences at once from a set of a plurality of bytes in one word. In such the case, according to the correction instruction, it is possible to find the sum ultimately.

A calculation unit network is set up so that (i) the content of the register (fr1) which content is necessary for the calculation is supplied from the preceding seventh calculation device 720 to an eighth calculation device 820 via a bypass (fr1-bypass), and (ii) the result of the calculation performed by the eighth calculation device 820 is stored in a register (fr1) in a tenth register file section 1010.

Fig. 18 shows the interpretation of the machine language instruction in the ninth line of the instruction code shown in Fig. 9. In Fig. 18, "S9" indicates locations where networks are set up in accordance with the instruction code in the ninth line.

The instruction code in the ninth line describes one conditional set instruction (cset).

The conditional set instruction (cset) instructs (i) "0" to be stored in a register (fr1) in an eleventh register file section 1110, in a case where the sum found in accordance with the correction instruction (msum) is less than a threshold value given by a register (fr9), or (ii) "1" to be stored therein in the other cases.

A calculation unit network is set up so that: the content of a register (fr1) which content is necessary for the calculation is supplied from the preceding eighth calculation device 820 to a ninth calculation device 920 via a bypass (fr1-bypass); the threshold value therefor is read out from the register (fr9) in the ninth register file section 910 by making use of the configuration that the threshold value has been sequentially transferred from the first register file section 110 to the register (fr9) in the ninth register file section 910; and the result of the calculation performed by the ninth calculation device 920 is stored in the register (fr1) in the eleventh register file section 1110.

Fig. 19 shows the interpretation of the machine language instruction in the tenth line of the instruction code shown in Fig. 9. In Fig. 19, "S10" indicates locations where networks are set up in accordance with the instruction code in the tenth line.

The instruction code in the tenth line is made up of one store instruction (stb), one addi instruction, and one unconditional branch instruction (bra).

According to the store instruction (stb), (i) the content of a register (gr5) and (ii) a constant (0) (const.) are added up. Then, the sum thus obtained is used as a main memory address, so that data is stored in a storing buffer (STBF).

As a calculation unit network for this, a setting is made so that the content of the register (gr5) in the tenth register file section 1010 is read out and inputted into a calculation unit (EAG) belonging to a tenth calculation device 1020.

Further, the sum given by the EAG is stored in the holding unit thereof. In the next cycle, the sum stored in the holding unit is transferred to a tenth loading/storing section 1030.

The content of the storing buffer (STBF) is sequentially outputted to an external memory.

The addi instruction is a machine language instruction for instructing updating of the address of the register (gr5).

Upon detection of the addition instruction, a feedback loop is generated for the tenth calculation device 1020, which is a calculation device utilizing the register (gr5). The generation of the feedback loop automatically updates the storing address of the tenth calculation devices 1020.

Upon detection of the unconditional branch instruction (bra), the below-described network setup completion process is started.

In the operation shown in Fig. 20, networks which become unnecessary at the end are deleted.

As described above, in order to incrementally perform network setup by sequentially decoding machine language instructions, an execution result of a calculation device of one stage needs to be bypassed to a calculation device of another stage following the one stage so that the execution result is used therein, and also needs to be written into a register file section of the another stage. A purpose of this is to also deal with a case where the execution result of the calculation device of the one stage is used not only by the calculation device of the another stage but also by at least one of further another stage following the another stage and its subsequent stages.

However, once all the loop structures are grasped, it is possible to omit unnecessary register value transfer, and it is not necessary to write a register value into a register of a stage which directly or indirectly follows a stage to which a last-used calculation device belongs. Deleting the unnecessary networks is referred to as the network setup completion process.

Specifically, "×" in Fig. 20 indicates a path determined to be unnecessary, which path is used to write a register value into a register. In the case shown in Fig. 20, paths between register file sections are left only for the register (gr4), the register (gr5), and the register (fr9).

Similarly, in the middle way of transferring content between the cache memories, some paths can be removed.

As described previously, a data processing device of the present invention and a data processing method thereof are each configured as follows: While maintaining one set of a basic structure, which includes a register file section, a calculation device, and a loading/storing section, a plurality of such sets are arranged in series, and a necessary register value is transmitted between register file sections adjacent to each other.

Further, the loading/storing section is configured as follows: A plurality of sets each constituting a loading/storing section are arranged in series, and necessary data is transmitted between (i) each of the sets and (ii) a small cache memory adjacent to said each of the sets.

As a result, it is possible to linearly increase the number of concurrently-operating registers and calculation devices. In addition, complexity in supplying content of a register having an arbitrary number to an arbitrary calculation device can be dealt with merely by a single set of the basic structure.

Therefore, according to the data processing device of the present invention and the data processing method thereof, it is possible to provide a large-scale parallel operation which has been conventionally impossible.

Furthermore, according to the data processing device of the present invention and the data processing method thereof, it is possible to perform data transmission between the sets in an efficient manner, and also to use an existing VLIW machine language instruction.

Note that, for the function for transmitting a register value between register files adjacent to each other, for example, the register files adjacent to each other can be configured to have the same number of physical registers. Alternatively, such a configuration can be employed in which one of the register files adjacent to each other includes a smaller number of physical registers than that of the other, and a table indicating correspondence between the register numbers is used in combination.

Further, for the function for transmitting data between small cache memories adjacent to each other, such a configuration can be employed in which the entire cache memory is copied at once. Alternatively, such a configuration can be employed in which only difference data supplied from a cache memory of a preceding stage is transmitted to a following stage which follows the preceding stage, so that substantially the same content is copied into the following stage.

The present invention is not limited to the description of the embodiments above, but may be altered by a skilled person within the scope of the claims.

### Industrial Applicability

The present invention is suitably applicable to a data processing device for concurrently executing a plurality of machine language instructions at a high speed.

### Reference Signs List

10 Instruction memory section
20 Instruction fetching section (instruction fetching/decoding section)
30 Instruction decoding section (instruction fetching/decoding section)
101, 102, 103, 104, 105, 106, 107, 108 Data processing device
110, 210, 310, 410, 510, 610, 710, 810, 910, 1010, 1110 Register file section
120, 220, 320, 420, 520, 620, 720, 820, 920, 1020
   Calculation device (calculation section, holding section)
130, 230, 330, 430, 1030 Loading/storing section (loading section, storing section)
130, 230, 330, 430 Cache memory
150 External memory

## Claims

1. A data processing device (101, 102, 103, 104, 105, 106, 107, 108) for executing an instruction code including a plurality of lines of machine language instructions, comprising:
an instruction memory section (10) for holding the instruction code;
an instruction fetching/ decoding section (30) for (i) retrieving, from the instruction memory section (10), the plurality of lines of the machine language instructions included in the instruction code and (ii) decoding the plurality of lines of the machine language instructions;
n1 register file sections (110, 210, 310, 410, 510, 610, 710, 810, 910, 1010, 1110) including (i) a first register file section including a plurality of first registers which are associated in a one-to-one relationship with a plurality of register numbers described in the instruction code being to be decoded by the instruction fetching/ decoding section (30) and which temporarily hold pieces of data associated with the respective register numbers and (ii) a second register file section including a plurality of second registers which are associated in a one-to-one relationship with the first registers in the first register file section;
n2 calculation sections (120, 220, 320, 420, 520, 620, 720, 820, 920, 1020) including a first calculation section and a second calculation section, the first calculation section executing a calculation by use of (i) pieces of data read from the first registers in the first register file section and (ii) at least one machine language instruction among the plurality of lines of the machine language instructions, and the second calculation section executing a calculation by use of, among the plurality of lines of the machine language instructions, at least one machine language instruction which is not said at least one machine language instruction used by the first calculation section; and
n3 holding sections (120, 220, 320, 420, 520, 620, 720, 820, 920, 1020) including a first holding section, the first holding section (i) serving as a destination of a result of the calculation executed by the first calculation section and (ii) temporarily holding the result of the calculation executed by the first calculation section, in a case where the first calculation section executes the calculation, n1 and n3 being each an integer of 2 or greater and n2 being an integer greater than 2,
the first register file section transferring, to one of the second registers in the second register file section, a piece of data which is held by one of the first registers and which is not a subject of the calculation executed by the first calculation section, said one of the first registers and said one of the second registers being associated with each other,
the first holding section (i) setting the second calculation section as a destination of the result of the calculation executed by the first calculation section and (ii) transferring the result of the calculation to the second calculation section, in a case where the first holding section holds the result of the calculation executed by the first calculation section, and
the second calculation section executing, in parallel with the calculation executed by the first calculation section, a calculation by use of at least either one of (i) pieces of data read from the second registers in the second register file section and (ii) the result of the calculation transferred from the first holding section, **characterised in that**
in a case where at least one of an (N+2)th and subsequent calculation sections included in the n2 calculation sections uses, in order to execute a calculation, a result of a calculation which result is held by an Nth holding section included in the n3 holding sections, the Nth holding section transfers the result of the calculation to an (N+2)th register file section included in the n1 register file sections;
in a case where none of the (N+2)th and subsequent calculation sections use, in order to execute a calculation, a result of a calculation which result is held by the Nth holding section, the Nth holding section transfers the result of the calculation to an (N+1) calculation section included in the n2 calculation sections; and
N is an integer of 1 or greater and not greater than n2.

2. The data processing device (101, 102, 103, 104, 105, 106, 107, 108) as set forth in claim 1, wherein:
the n1 register file sections further include a third register file section including a plurality of third registers which are associated in a one-to-one relationship with the second registers in the second register file section;
the n2 calculation sections further include a third calculation section, the third calculation section executing a calculation by use of, among the plurality of lines of the machine language instructions, at least one machine language instruction which is not said at least one machine language instruction used by the first calculation section or said at least one machine language instruction used by the second calculation section;
the n3 holding sections further include a second holding section, the second holding section (i) serving as a destination of a result of the calculation executed by the second calculation section and (ii) temporarily holding the result of the calculation executed by the second calculation section, in a case where the second calculation section executes the calculation;
the second register file section transfers, to one of the third registers in the third register file section, a piece of data which is held by one of the second registers and which is not a subject of the calculation executed by the second calculation section, said one of the second registers and said one of the third registers being associated with each other;
the second holding section (i) sets the third calculation section as a destination of the result of the calculation executed by the second calculation section and (ii) transfers the result of the calculation to the third calculation section, in a case where the second holding section holds the result of the calculation executed by the second calculation section; and
the third calculation section executes, in parallel with the calculations executed by the first and second calculation sections, a calculation by use of at least either one of (i) pieces of data read from the third registers in the third register file section and (ii) the result of the calculation transferred from the second holding section.

3. The data processing device (101, 102, 103, 104, 105, 106, 107, 108) as set forth in any one of claims 1 through 2, wherein:
in a case where the instruction fetching/ decoding section (30) decodes an operation instruction included in the instruction code which operation instruction is described so that a plurality of register file sections included in the n1 register file sections, a plurality of calculation sections included in the n2 calculation sections, and a plurality of holding sections included in the n3 holding sections are concurrently operated, the plurality of register file sections, the plurality of calculation sections, and the plurality of holding sections are caused to concurrently operate and the instruction fetching/ decoding section (30) is caused to stop operating according to a result of the decoding of the operation instruction.

4. The data processing device (101, 102, 103, 104, 105, 106, 107, 108) as set forth in claim 3, wherein:
the operation instruction includes (i) pieces of setting information and (ii) an operation end condition, the pieces of setting information being set for the plurality of register file sections, the plurality of calculation sections, and the plurality of holding sections so as to control the plurality of register file sections, the plurality of calculation sections, and the plurality of holding sections to operate concurrently, the operation end condition causing the plurality of register file sections, the plurality of calculation sections, and the plurality of holding sections to stop operating concurrently;
until the operation instruction is decoded by the instruction fetching/decoding section (30), the instruction fetching/decoding section (30), the first register file section among the plurality of register file sections, the first calculation section among the plurality of calculation sections, and the first holding section among the plurality of holding sections are caused to operate concurrently;
in a case where the operation instruction is decoded, the instruction fetching/ decoding section (30) is caused to stop operating and the plurality of register file sections, the plurality of calculation sections, and the plurality of holding sections are caused to operate concurrently according to a result of the decoding of the operation instruction; and
in a case where the operation end condition included in the operation instruction is satisfied, the plurality of register file sections other than the first register file section, the plurality of calculation sections other than the first calculation section, and the plurality of holding sections other than the first holding section are caused to stop operating, and the instruction fetching/ decoding section, the first register file section, the first calculation section, and the first holding section are caused to operate concurrently.

5. The data processing device (101, 102, 103, 104, 105, 106, 107, 108) as set forth in any one of claims 1 through 4, wherein:
each of the n2 calculation sections includes:
a cache memory (140, 240, 340, 440) for temporarily storing content of an external memory (150) which is provided outside the data processing device ((101, 102, 103, 104, 105, 106, 107, 108);
a loading section (130, 230, 330, 430, 1030) for reading data from the cache memory by use of address information added to a loading instruction included in the instruction code; and
a storing section (130, 230, 330, 430, 1030) for temporarily storing the data read by the loading section (130, 230, 330, 430, 1030); and
an Nth calculation section included in the n2 calculation sections is capable of transferring, to (i) at least one of (N+1)th and subsequent calculation sections included in the n2 calculation sections and (ii) at least one of (N+1)th and subsequent register file sections included in the n1 register file sections, data held by a storing section (130, 230, 330, 430, 1030) of the Nth calculation section.

6. The data processing device (101, 102, 103, 104, 105, 106, 107, 108) as set forth in claim 5, wherein:
the Nth calculation section included in the n2 calculation sections is configured to be capable of transferring, in a case where a cache memory (140, 240, 340, 440) of the Nth calculation section holds data, the data to a cache memory (140, 240, 340, 440) of the (N+1)th calculation section included in the n2 calculation sections.

7. The data processing device (101, 102, 103, 104, 105, 106, 107, 108) as set forth in claim 5 or 6, wherein:
in a case where each of the n2 calculation sections causes the loading section (130, 230, 330, 430, 1030) of said each of the n2 calculation sections to read data from the cache memory (140, 240, 340, 440) of said each of the n2 calculation sections, said each of the n2 calculation sections holds the address information added to the loading instruction, and every time when the loading section (130, 230, 330, 430, 1030) of said each of the n2 calculation sections completes reading data from the cache memory (140, 240, 340, 440), said each of the n2 calculation sections increases or decreases, by a width of the data thus read, the address information thus held, so as to generate address information which is to be used by the loading section of said each of the n2 calculation sections to read data from the cache memory (140, 240, 340, 440) a next time.

8. The data processing device (101, 102, 103, 104, 105, 106, 107, 108) as set forth in claim 3 or 4, wherein:
the first calculation section includes a cache memory (140, 240, 340, 440) which is directly connected with an external memory (150) which is provided outside the data processing device (101, 102, 103, 104, 105, 106, 107, 108);
the cache memory (140, 240, 340, 440) includes data transferring means for performing data transfer according to transfer information, the transfer information including (i) an address of a writing destination and (ii) a length of data to be transferred, both of (i) the address of the writing destination and (ii) the length of the data to be transferred being associated with the operation instruction; and
the data transferring means causes a plurality pieces of data to be transferred from a plurality of mutually different addresses on the external memory in such a manner that sets of pieces of data are transferred one after another, each of the sets of pieces of data being transferred at once.

9. The data processing device (101, 102, 103, 104, 105, 106, 107, 108) as set forth in claim 8, wherein:
the external memory (150) includes data transferring means for performing data transfer according to transfer information, the transfer information including (i) an address of a writing destination and (ii) the number of transferred words, both of (i) the address of the writing destination and (ii) the number of transferred words being associated with the operation instruction; and
the data transferring means causes a plurality of pieces of data to be consecutively transferred from an external input/output device to, among a plurality of banks included in the external memory (150), a bank which stores oldest data.

10. The data processing device (101, 102, 103, 104, 105, 106, 107, 108) as set forth in claim 4, wherein:
in a case where a cache memory (140, 240, 340, 440) of the first calculation section does not include data corresponding to the address information added to the loading instruction, the first calculation section waits for data which is to be transferred from an external memory (150), and sets, as the operation end condition, completion of a predetermined number of operations by at least one of the second and subsequent calculation sections, the predetermined number corresponding to the number of transferred words associated with the operation instruction.

## Patentansprüche

1. Datenverarbeitungsvorrichtung (101, 102, 103, 104, 105, 106, 107, 108) zum Ausführen eines Befehlscodes, der mehrere Zeilen Befehle in Maschinensprache umfasst, Folgendes umfassend:
einen Befehlsspeicherabschnitt (10) zum Halten des Befehlscodes;
einen Befehlsabruf-/-decodierabschnitt (30) zum (i) Abrufen der mehreren Zeilen der Befehle in Maschinensprache aus dem Befehlsspeicherabschnitt (10), die in dem Befehlscode enthalten sind, und (ii) Decodieren der mehreren Zeilen der Befehle in Maschinensprache;
n1 Registerdateiabschnitte (110, 210, 310, 410, 510, 610, 710, 810, 910, 1010, 1110), die (i) einen ersten Registerdateiabschnitt, der mehrere erste Register umfasst, die in einer Eins-zu-Eins-Beziehung mehreren Registernummern zugeordnet sind, die in dem Befehlscode beschrieben sind, der durch den Befehlsabruf-/-decodierabschnitt (30) decodiert werden soll, und die vorübergehend Datenstücke halten, die den jeweiligen Registernummern zugeordnet sind, und (ii) einen zweiten Registerdateiabschnitt umfassen, der mehrere zweite Register umfasst, die in einer Eins-zu-Eins-Beziehung den ersten Registern in dem ersten Registerdateiabschnitt zugeordnet sind;
n2 Berechnungsabschnitte (120, 220, 320, 420, 520, 620, 720, 820, 920, 1020), die einen ersten Berechnungsabschnitt und einen zweiten Berechnungsabschnitt umfassen, wobei der erste Berechnungsabschnitt eine Berechnung durch Verwendung von (i) Datenstücken, die aus den ersten Registern in dem ersten Registerdateiabschnitt gelesen wurden, und (ii) mindestens einem Befehl in Maschinensprache unter den mehreren Zeilen der Befehle in Maschinensprache ausführt, und der zweite Berechnungsabschnitt eine Berechnung durch Verwendung von mindestens einem Befehl in Maschinensprache unter den mehreren Zeilen der Befehle in Maschinensprache ausführt, der nicht der mindestens eine Befehl in Maschinensprache ist, der durch den ersten Berechnungsabschnitt verwendet wird; und
n3 Halteabschnitte (120, 220, 320, 420, 520, 620, 720, 820, 920, 1020), die einen ersten Halteabschnitt umfassen, wobei der erste Halteabschnitt (i) als ein Ziel eines Ergebnisses der Berechnung dient, die durch den ersten Berechnungsabschnitt ausgeführt wurde, und (ii) in einem Fall, in dem der erste Berechnungsabschnitt die Berechnung ausführt, n1 und n3 jeweils eine ganze Zahl von 2 oder größer sind und n2 eine ganze Zahl größer als 2 ist, vorübergehend das Ergebnis der Berechnung hält, die durch den ersten Berechnungsabschnitt ausgeführt wurde,
wobei der erste Registerdateiabschnitt an eines der zweiten Register in dem zweiten Registerdateiabschnitt ein Datenstück überträgt, das von einem der ersten Register gehalten wird und das kein Subjekt der Berechnung ist, die durch den ersten Berechnungsabschnitt ausgeführt wird, wobei das eine der ersten Register und das eine der zweiten Register einander zugeordnet sind,
wobei der erste Halteabschnitt (i) den zweiten Berechnungsabschnitt als ein Ziel des Ergebnisses der Berechnung einstellt, die durch den ersten Berechnungsabschnitt ausgeführt wurde, und (ii) in einem Fall, in dem der erste Halteabschnitt das Ergebnis der Berechnung hält, die durch den ersten Berechnungsabschnitt ausgeführt wurde, das Ergebnis der Berechnung an den zweiten Berechnungsabschnitt überträgt, und
wobei der zweite Berechnungsabschnitt parallel zu der Berechnung, die durch den ersten Berechnungsabschnitt ausgeführt wird, eine Berechnung durch Verwendung von mindestens entweder (i) Datenstücken, die aus den zweiten Registern in dem zweiten Registerdateiabschnitt gelesen wurden, und (ii) dem Ergebnis der Berechnung ausführt, das aus dem ersten Halteabschnitt übertragen wurde, **dadurch gekennzeichnet, dass**
in einem Fall, in dem mindestens einer eines (N+2)-ten und nachfolgender Berechnungsabschnitte, die in den n2 Berechnungsabschnitten enthalten sind, ein Ergebnis einer Berechnung verwendet, um eine Berechnung auszuführen, wobei das Ergebnis durch einen N-ten Halteabschnitt gehalten wird, der in den n3 Halteabschnitten enthalten ist, der N-te Halteabschnitt das Ergebnis der Berechnung an einen (N+2)-ten Registerdateiabschnitt überträgt, der in den n1 Registerdateiabschnitten enthalten ist;
in einem Fall, in dem keiner des (N+2)-ten und nachfolgender Berechnungsabschnitte ein Ergebnis einer Berechnung verwendet, um eine Berechnung auszuführen, wobei das Ergebnis durch den N-ten Halteabschnitt gehalten wird, überträgt der N-te Halteabschnitt das Ergebnis der Berechnung an einen (N+1) Berechnungsabschnitt, der in den n2 Berechnungsabschnitten enthalten ist; und
N eine ganze Zahl von 1 oder größer und nicht größer als n2 ist.

2. Datenverarbeitungsvorrichtung (101, 102, 103, 104, 105, 106, 107, 108) nach Anspruch 1, wobei:
die n1 Registerdateiabschnitte weiterhin einen dritten Registerdateiabschnitt umfassen, der mehrere dritte Register umfasst, die in einer Eins-zu-Eins-Beziehung den zweiten Registern in dem zweiten Registerdateiabschnitt zugeordnet sind;
die n2 Berechnungsabschnitte weiterhin einen dritten Berechnungsabschnitt umfassen, wobei der dritte Berechnungsabschnitt eine Berechnung durch Verwendung mindestens eines Befehls in Maschinensprache unter den mehreren Zeilen der Befehle in Maschinensprache ausführt, der nicht der mindestens eine Befehl in Maschinensprache ist, der durch den ersten Berechnungsabschnitt verwendet wird, oder der mindestens eine Befehl in Maschinensprache ist, der durch den zweiten Berechnungsabschnitt verwendet wird;
die n3 Halteabschnitte weiterhin einen zweiten Halteabschnitt umfassen, wobei der zweite Halteabschnitt (i) als ein Ziel eines Ergebnisses der Berechnung dient, die durch den zweiten Berechnungsabschnitt ausgeführt wurde, und (ii) in einem Fall, in dem der zweite Berechnungsabschnitt die Berechnung ausführt, vorübergehend das Ergebnis der Berechnung hält, die durch den zweiten Berechnungsabschnitt ausgeführt wurde;
der zweite Registerdateiabschnitt an eines der dritten Register in dem dritten Registerdateiabschnitt ein Datenstück überträgt, das von einem der zweiten Register gehalten wird und das kein Subjekt der Berechnung ist, die durch den zweiten Berechnungsabschnitt ausgeführt wird, wobei das eine der zweiten Register und das eine der dritten Register einander zugeordnet sind,
der zweite Halteabschnitt (i) den dritten Berechnungsabschnitt als ein Ziel des Ergebnisses der Berechnung einstellt, die durch den zweiten Berechnungsabschnitt ausgeführt wurde, und (ii) in einem Fall, in dem der zweite Halteabschnitt das Ergebnis der Berechnung hält, die durch den zweiten Berechnungsabschnitt ausgeführt wurde, das Ergebnis der Berechnung an den dritten Berechnungsabschnitt überträgt; und
der dritte Berechnungsabschnitt parallel zu den Berechnungen, die durch den ersten und den zweiten Berechnungsabschnitt ausgeführt werden, eine Berechnung durch Verwendung von mindestens entweder (i) Datenstücken, die aus den dritten Registern in dem dritten Registerdateiabschnitt gelesen wurden, und (ii) dem Ergebnis der Berechnung ausführt, das aus dem zweiten Halteabschnitt übertragen wurde.

3. Datenverarbeitungsvorrichtung (101, 102, 103, 104, 105, 106, 107, 108) nach einem der Ansprüche 1 bis 2, wobei:
in einem Fall, in dem der Befehlsabruf-/-decodierabschnitt (30) einen Operationsbefehl decodiert, der in dem Befehlscode enthalten ist, wobei der Operationsbefehl so beschrieben ist, dass mehrere Registerdateiabschnitte, die in den n1 Registerdateiabschnitten enthalten sind, mehrere Berechnungsabschnitte, die in den n2 Berechnungsabschnitten enthalten sind, und mehrere Halteabschnitte, die in den n3 Halteabschnitten enthalten sind, gleichzeitig betrieben werden, bewirkt wird, dass die mehreren Registerdateiabschnitte, die mehreren Berechnungsabschnitte und die mehreren Halteabschnitte gleichzeitig arbeiten, und bewirkt wird, dass der Befehlsabruf-/- decodierabschnitt (30) gemäß einem Ergebnis des Decodierens des Operationsbefehls einen Betrieb einstellt.

4. Datenverarbeitungsvorrichtung (101, 102, 103, 104, 105, 106, 107, 108) nach Anspruch 3, wobei:
der Operationsbefehl (i) Stücke der Einstellinformationen und (ii) einen Betriebsendzustand umfasst, wobei die Stücke der Einstellinformationen für die mehreren Registerdateiabschnitte, die mehreren Berechnungsabschnitte und die mehreren Halteabschnitte eingestellt sind, um so die mehreren Registerdateiabschnitte, die mehreren Berechnungsabschnitte und die mehreren Halteabschnitte zu steuern, dass sie gleichzeitig arbeiten, wobei der Operationsendzustand bewirkt, dass die mehreren Registerdateiabschnitte, die mehreren Berechnungsabschnitte und die mehreren Halteabschnitte ihren Betrieb gleichzeitig einstellen;
bis der Operationsbefehl durch den Befehlsabruf-/-decodierabschnitt (30) decodiert wird, bewirkt wird, dass der Befehlsabruf-/-decodierabschnitt (30), der erste Registerdateiabschnitt unter den mehreren Registerdateiabschnitten, der erste Berechnungsabschnitt unter den mehreren Berechnungsabschnitten und der erste Halteabschnitt unter den mehreren Halteabschnitten gleichzeitig arbeiten;
in einem Fall, in dem der Operationsbefehl decodiert wird, bewirkt wird, dass der Befehlsabruf-/-decodierabschnitt (30) einen Betrieb einstellt, und bewirkt wird, dass die mehreren Registerdateiabschnitte, die mehreren Berechnungsabschnitte und die mehreren Halteabschnitte gemäß einem Ergebnis des Decodierens des Operationsbefehls gleichzeitig arbeiten; und
in einem Fall, in dem der Betriebsendzustand, der in dem Operationsbefehl enthalten ist, erfüllt ist, bewirkt wird, dass die mehreren anderen Registerdateiabschnitte als der erste Registerdateiabschnitt, die mehreren anderen Berechnungsabschnitte als der erste Berechnungsabschnitt und die mehreren anderen Halteabschnitte als der erste Halteabschnitt ihren Betrieb einstellen, und bewirkt wird, dass der Befehlsabruf-/-decodierabschnitt, der erste Registerdateiabschnitt, der erste Berechnungsabschnitt und der erste Halteabschnitt gleichzeitig arbeiten.

5. Datenverarbeitungsvorrichtung (101, 102, 103, 104, 105, 106, 107, 108) nach einem der Ansprüche 1 bis 4, wobei:
jeder der n2 Berechnungsabschnitte Folgendes umfasst:
einen Cache-Speicher (140, 240, 340, 440) zum vorübergehenden Speichern eines Inhalts eines externen Speichers (150), der außerhalb der Datenverarbeitungsvorrichtung (101, 102, 103, 104, 105, 106, 107, 108) bereitgestellt ist;
einen Ladeabschnitt (130, 230, 330, 430, 1030) zum Lesen von Daten aus dem Cache-Speicher durch Verwendung von Adressinformationen, die zu einem Ladebefehl hinzugefügt wurden, der in dem Befehlscode enthalten ist; und
einen Speicherabschnitt (130, 230, 330, 430, 1030) zum vorübergehenden Speichern der Daten, die durch den Ladeabschnitt (130, 230, 330, 430, 1030) gelesen wurden; und
ein N-ter Berechnungsabschnitt, der in den n2 Berechnungsabschnitten enthalten ist, in der Lage ist, Daten, die durch einen Speicherabschnitt (130, 230, 330, 430, 1030) des N-ten Berechnungsabschnitts gehalten werden, an (i) mindestens einen eines (N+1)-ten und nachfolgender Berechnungsabschnitte, die in den n2 Berechnungsabschnitten enthalten sind, und an (ii) mindestens einen eines (N+1)-ten und nachfolgender Registerdateiabschnitte, die in den n1 Registerdateiabschnitten enthalten sind, zu übertragen.

6. Datenverarbeitungsvorrichtung (101, 102, 103, 104, 105, 106, 107, 108) nach Anspruch 5, wobei:
der N-te Berechnungsabschnitt, der in den n2 Berechnungsabschnitten enthalten ist, konfiguriert ist, in der Lage zu sein, in einem Fall, in dem ein Cache-Speicher (140, 240, 340, 440) des N-ten Berechnungsabschnitts Daten hält, die Daten an einen Cache-Speicher (140, 240, 340, 440) des (N+1)-ten Berechnungsabschnitts, der in den n2 Berechnungsabschnitten enthalten ist, zu übertragen.

7. Datenverarbeitungsvorrichtung (101, 102, 103, 104, 105, 106, 107, 108) nach Anspruch 5 oder 6, wobei:
in einem Fall, in dem jeder der n2 Berechnungsabschnitte bewirkt, dass der Ladeabschnitt (130, 230, 330, 430, 1030) von jedem der n2 Berechnungsabschnitte Daten aus dem Cache-Speicher (140, 240, 340, 440) von jedem der n2 Berechnungsabschnitte liest, jeder der n2 Berechnungsabschnitte die Adressinformationen hält, die zu dem Ladebefehl hinzugefügt wurden, und jedes Mal, wenn der Ladeabschnitt (130, 230, 330, 430, 1030) von jedem der n2 Berechnungsabschnitte ein Lesen von Daten aus dem Cache-Speicher (140, 240, 340, 440) beendet, jeder der n2 Berechnungsabschnitte die so gehaltenen Adressinformationen um eine Breite der so gelesenen Daten erhöht oder vermindert, um so Adressinformationen zu erzeugen, die durch den Ladeabschnitt von jedem der n2 Berechnungsabschnitte verwendet werden, um ein nächstes Mal Daten aus dem Cache-Speicher (140, 240, 340, 440) zu lesen.

8. Datenverarbeitungsvorrichtung (101, 102, 103, 104, 105, 106, 107, 108) nach Anspruch 3 oder 4, wobei:
der erste Berechnungsabschnitt einen Cache-Speicher (140, 240, 340, 440) umfasst, der unmittelbar mit einem externen Speicher (150) verbunden ist, der außerhalb der Datenverarbeitungsvorrichtung (101, 102, 103, 104, 105, 106, 107, 108) bereitgestellt ist;
der Cache-Speicher (140, 240, 340, 440) ein Datenübertragungsmittel zum Durchführen einer Datenübertragung gemäß Übertragungsinformationen umfasst, wobei die Übertragungsinformationen (i) eine Adresse eines Schreibziels und (ii) eine Länge der Daten, die übertragen werden sollen, umfassen, wobei sowohl (i) die Adresse des Schreibziels als auch (ii) die Länge der Daten, die übertragen werden sollen, dem Operationsbefehl zugeordnet sind; und
das Datenübertragungsmittel bewirkt, dass mehrere Datenstücke aus mehreren untereinander verschiedenen Adressen auf dem externen Speicher auf eine derartige Weise übertragen werden, dass Sätze von Datenstücken einer nach dem anderen übertragen werden, wobei jeder der Sätze von Datenstücken auf einmal übertragen wird.

9. Datenverarbeitungsvorrichtung (101, 102, 103, 104, 105, 106, 107, 108) nach Anspruch 8, wobei:
der externe Speicher (150) ein Datenübertragungsmittel zum Durchführen einer Datenübertragung gemäß Übertragungsinformationen umfasst, wobei die Übertragungsinformationen (i) eine Adresse eines Schreibziels und (ii) die Anzahl übertragener Worte umfassen, wobei sowohl (i) die Adresse des Schreibziels als auch (ii) die Anzahl übertragener Worte dem Operationsbefehl zugeordnet sind; und
das Datenübertragungsmittel bewirkt, dass mehrere Datenstücke nacheinander aus einer externen Eingabe-/Ausgabevorrichtung an eine Bank unter mehreren Banken, die in dem externen Speicher (150) enthalten sind, übertragen werden, die älteste Daten speichert.

10. Datenverarbeitungsvorrichtung (101, 102, 103, 104, 105, 106, 107, 108) nach Anspruch 4, wobei:
in einem Fall, in dem ein Cache-Speicher (140, 240, 340, 440) des ersten Berechnungsabschnitts keine Daten entsprechend der Adressinformationen umfasst, die dem Ladebefehl hinzugefügt wurden, der erste Berechnungsabschnitt auf Daten wartet, die aus einem externen Speicher (150) übertragen werden sollen, und als den Betriebsendzustand Abschließen einer vorgegebenen Anzahl von Operationen durch mindestens einen des zweiten und nachfolgender Berechnungsabschnitte einstellt, wobei die vorgegebene Anzahl der Anzahl übertragener Worte entspricht, die dem Operationsbefehl zugeordnet sind.

## Revendications

1. Dispositif de traitement de données (101, 102, 103, 104, 105, 106, 107, 108) pour une exécution d'un code d'instruction incluant une pluralité de lignes d'instructions en langage machine, comprenant :
une section de mémoire d'instructions (10) pour un maintien du code d'instruction ;
une section de recherche/décodage d'instructions (30) (i) pour une récupération, à partir de la section de mémoire d'instructions (10), de la pluralité de lignes des instructions en langage machine incluse dans le code d'instruction et (ii) pour un décodage de la pluralité de lignes des instructions en langage machine ;
n1 sections de fichier de registre (110, 210, 310, 410, 510, 610, 710, 810, 910, 1010, 1110) incluant (i) une première section de fichiers de registre incluant une pluralité de premiers registres qui sont associés dans une relation un à un avec une pluralité de numéros de registres décrits dans le code d'instruction devant être décodé par la section de recherche/décodage d'instructions (30) et qui maintiennent temporairement des éléments de données associés aux numéros de registres respectifs et (ii) une deuxième section de fichiers de registre incluant une pluralité de deuxièmes registres qui sont associés dans une relation un à un avec les premiers registres dans la première section de fichiers de registre ;
n2 sections de calcul (120, 220, 320, 420, 520, 620, 720, 820, 920, 1020) incluant une première section de calcul et une deuxième section de calcul, la première section de calcul exécutant un calcul à l'aide (i) d'éléments de données lus à partir des premiers registres dans la première section de fichiers de registre et (ii) d'au moins une instruction en langage machine parmi la pluralité de lignes des instructions en langage machine, et la deuxième section de calcul exécutant un calcul à l'aide, parmi la pluralité de lignes des instructions en langage machine, d'au moins une instruction en langage machine qui n'est pas ladite au moins une instruction en langage machine utilisée par la première section de calcul ; et
n3 sections de maintien (120, 220, 320, 420, 520, 620, 720, 820, 920, 1020) incluant une première section de maintien, la première section de maintien (i) servant à titre de destination d'un résultat du calcul exécuté par la première section de calcul et (ii) maintenant temporairement le résultat du calcul exécuté par la première section de calcul, dans le cas où la première section de calcul exécute le calcul,
n1 et n3 étant chacun un entier de 2 ou plus et n2 étant un entier supérieur à 2,
la première section de fichiers de registre transférant, vers un des deuxièmes registres dans la deuxième section de fichiers de registre, un élément de données qui est maintenu par un des premiers registres et qui ne fait pas l'objet du calcul exécuté par la première section de calcul, ledit un des premiers registres et ledit un des deuxièmes registres étant associés l'un avec l'autre,
la première section de maintien (i) définissant la deuxième section de calcul à titre de destination du résultat du calcul exécuté par la première section de calcul et (ii) transférant le résultat du calcul vers la deuxième section de calcul, dans le cas où la première section de maintien maintient le résultat du calcul exécuté par la première section de calcul, et
la deuxième section de calcul exécutant, parallèlement au calcul exécuté par la première section de calcul, un calcul à l'aide d'au moins un (i) d'éléments de données lus à partir des deuxièmes registres dans la deuxième section de fichiers de registre et (ii) du résultat du calcul transféré à partir de la première section de maintien, **caractérisé en ce que** dans le cas où au moins une d'une (N+2)^{e} section de calcul et des suivantes incluses dans les n2 sections de calcul utilise, afin d'exécuter un calcul, un résultat d'un calcul lequel résultat est maintenu par une N^{e} section de maintien incluse dans les n3 sections de maintien, la N^{e} section de maintien transfère le résultat du calcul vers une (N+2)^{e} section de fichiers de registre incluse dans les n1 sections de fichier de registre ;
dans le cas où aucune de la (N+2)^{e} section de calcul et des suivantes n'utilisent, afin d'exécuter un calcul, un résultat d'un calcul lequel résultat est maintenu par la N^{e} section de maintien, la N^{e} section de maintien transfère le résultat du calcul vers une (N+1) section de calcul incluse dans les n2 sections de calcul ; et
N est un entier de 1 ou plus et non supérieur à n2.

2. Dispositif de traitement de données (101, 102, 103, 104, 105, 106, 107, 108) selon la revendication 1, dans lequel :
les n1 sections de fichier de registre incluent en outre une troisième section de fichiers de registre incluant une pluralité de troisièmes registres qui sont associés dans une relation un à un avec les deuxièmes registres dans la deuxième section de fichiers de registre ;
les n2 sections de calcul incluent en outre une troisième section de calcul, la troisième section de calcul exécutant un calcul à l'aide, parmi la pluralité de lignes des instructions en langage machine, d'au moins une instruction en langage machine qui n'est pas ladite au moins une instruction en langage machine utilisée par la première section de calcul ou ladite au moins une instruction en langage machine utilisée par la deuxième section de calcul ;
les n3 sections de maintien incluent en outre une seconde section de maintien, la seconde section de maintien (i) servant à titre de destination d'un résultat du calcul exécuté par la deuxième section de calcul et (ii) maintenant temporairement le résultat du calcul exécuté par la deuxième section de calcul, dans le cas où la deuxième section de calcul exécute le calcul ;
la deuxième section de fichiers de registre transfère, vers un des troisièmes registres dans la troisième section de fichiers de registre, un élément de données qui est maintenu par un des deuxièmes registres et qui ne fait pas l'objet du calcul exécuté par la deuxième section de calcul, ledit un des deuxièmes registres et ledit un des troisièmes registres étant associés l'un à l'autre ;
la seconde section de maintien (i) définit la troisième section de calcul à titre de destination du résultat du calcul exécuté par la deuxième section de calcul et (ii) transfère le résultat du calcul vers la troisième section de calcul, dans le cas où la seconde section de maintien maintient le résultat du calcul exécuté par la deuxième section de calcul ; et
la troisième section de calcul exécute, parallèlement aux calculs exécutés par les première et deuxième sections de calcul, un calcul à l'aide d'au moins un (i) d'éléments de données lus à partir des troisièmes registres dans la troisième section de fichiers de registre et (ii) du résultat du calcul transféré à partir de la seconde section de maintien.

3. Dispositif de traitement de données (101, 102, 103, 104, 105, 106, 107, 108) selon l'une quelconque des revendications 1 à 2, dans lequel :
dans le cas où la section de recherche/décodage d'instructions (30) décode une instruction d'opération incluse dans le code d'instruction laquelle instruction d'opération est décrite de sorte qu'une pluralité de sections de fichier de registre incluse dans les n1 sections de fichier de registre, qu'une pluralité de sections de calcul incluse dans les n2 sections de calcul, et
qu'une pluralité de sections de maintien incluse dans les n3 sections de maintien sont opérées de manière concurrente, la pluralité de sections de fichier de registre, la pluralité de sections de calcul, et la pluralité de sections de maintien sont amenées à opérer de manière concurrente et la section de recherche/décodage d'instructions (30) est amenée à arrêter une opération selon un résultat du décodage de l'instruction d'opération.

4. Dispositif de traitement de données (101, 102, 103, 104, 105, 106, 107, 108) selon la revendication 3, dans lequel :
l'instruction d'opération inclut (i) des éléments d'informations de définition et (ii) une condition de fin d'opération, les éléments d'information de définition étant définis pour la pluralité de sections de fichier de registre, la pluralité de sections de calcul, et la pluralité de sections de maintien afin de commander la pluralité de sections de fichier de registre, la pluralité de sections de calcul, et la pluralité de sections de maintien pour une opération concurrente, la condition de fin d'opération amenant la pluralité de sections de fichier de registre, la pluralité de sections de calcul, et la pluralité de sections de maintien à arrêter une opération concurrente ;
jusqu'à ce que l'instruction d'opération soit décodée par la section de recherche/décodage d'instruction (30), la section de recherche/décodage d'instruction (30), la première section de fichiers de registre parmi la pluralité de sections de fichier de registre, la première section de calcul parmi la pluralité de sections de calcul, et la première section de maintien parmi la pluralité de sections de maintien sont amenées à opérer de manière concurrente ;
dans le cas où l'instruction d'opération est décodée, la section de recherche/décodage d'instruction (30) est amenée à arrêter une opération et la pluralité de sections de fichier de registre, la pluralité de sections de calcul, et la pluralité de sections de maintien sont amenées à opérer de manière concurrente selon un résultat du décodage de l'instruction d'opération ; et
dans le cas où la condition de fin d'opération incluse dans l'instruction d'opération est satisfaite, la pluralité de sections de fichier de registre autres que la première section de fichiers de registre, la pluralité de sections de calcul autres que la première section de calcul, et la pluralité de sections de maintien autres que la première section de maintien sont amenées à arrêter une opération, et la section de recherche/décodage d'instructions, la première section de fichiers de registre, la première section de calcul, et la première section de maintien sont amenées à opérer de manière concurrente.

5. Dispositif de traitement de données (101, 102, 103, 104, 105, 106, 107, 108) selon l'une quelconque des revendications 1 à 4, dans lequel :
chacune des n2 sections de calcul inclut :
une mémoire cache (140, 240, 340, 440) pour un stockage temporaire de contenu d'une mémoire externe (150) qui est fournie à l'extérieur du dispositif de traitement de données (101, 102, 103, 104, 105, 106, 107, 108) ;
une section de chargement (130, 230, 330, 430, 1030) pour une lecture de données à partir de la mémoire cache à l'aide d'informations d'adresse ajoutées à une instruction de chargement incluse dans le code d'instruction ; et
une section de stockage (130, 230, 330, 430, 1030) pour un stockage temporaire des données lues par la section de chargement (130, 230, 330, 430, 1030) ; et
une N^{e} section de calcul incluse dans les n2 sections de calcul est capable de transférer, vers (i) au moins une d'une (N+1)^{e} section de calcul et de suivantes incluses dans les n2 sections de calcul et (ii) au moins une d'une (N+1)^{e} section de fichiers de registre et de suivantes incluses dans les n1 sections de fichier de registre, des données maintenues par une section de stockage (130, 230, 330, 430, 1030) de la N^{e} section de calcul.

6. Dispositif de traitement de données (101, 102, 103, 104, 105, 106, 107, 108) selon la revendication 5, dans lequel :
la N^{e} section de calcul incluse dans les n2 sections de calcul est configurée pour être capable de transférer, dans le cas où une mémoire cache (140, 240, 340, 440) de la N^{e} section de calcul maintient des données, les données vers une mémoire cache (140, 240, 340, 440) de la (N+1)^{e} section de calcul incluse dans les n2 sections de calcul.

7. Dispositif de traitement de données (101, 102, 103, 104, 105, 106, 107, 108) selon la revendication 5 ou 6, dans lequel :
dans le cas où chacune des n2 sections de calcul amène la section de chargement (130, 230, 330, 430, 1030) de ladite chacune des n2 sections de calcul à lire des données à partir de la mémoire cache (140, 240, 340, 440) de ladite chacune des n2 sections de calcul, ladite chacune des n2 sections de calcul maintient les informations d'adresse ajoutées à l'instruction de chargement, et à chaque fois que la section de chargement (130, 230, 330, 430, 1030) de ladite chacune des n2 sections de calcul achève une lecture de données à partir de la mémoire cache (140, 240, 340, 440), ladite chacune des n2 sections de calcul augmente ou diminue, d'une largeur des données ainsi lues, les informations d'adresse ainsi maintenues, afin de générer des informations d'adresse qui doivent être utilisées par la section de chargement de ladite chacune des n2 sections de calcul pour lire des données à partir de la mémoire cache (140, 240, 340, 440) une prochaine fois.

8. Dispositif de traitement de données (101, 102, 103, 104, 105, 106, 107, 108) selon la revendication 3 ou 4, dans lequel :
la première section de calcul inclut une mémoire cache (140, 240, 340, 440) qui est directement connectée à une mémoire externe (150) qui est fournie à l'extérieur du dispositif de traitement de données (101, 102, 103, 104, 105, 106, 107, 108) ;
la mémoire cache (140, 240, 340, 440) inclut un moyen de transfert de données pour une réalisation d'un transfert de données selon des informations de transfert, les informations de transfert incluant (i) une adresse d'une destination d'écriture et (ii) une longueur de données à transférer, (i) l'adresse de la destination d'écriture et (ii) la longueur des données à transférer étant toutes deux associées à l'instruction d'opération ; et
le moyen de transfert de données amène une pluralité d'éléments de données à être transférée à partir d'une pluralité d'adresses mutuellement différentes sur la mémoire externe de telle sorte que des ensembles d'éléments de données sont transférés les uns après les autres, chacun des ensembles d'éléments de données étant transféré immédiatement.

9. Le dispositif de traitement de données (101, 102, 103, 104, 105, 106, 107, 108) selon la revendication 8, dans lequel :
la mémoire externe (150) inclut un moyen de transfert de données pour une réalisation d'un transfert de données selon des informations de transfert, les informations de transfert incluant (i) une adresse d'une destination d'écriture et (ii) le nombre de mots transférés, (i) l'adresse de la destination d'écriture et (ii) le nombre de mots transférés étant tous deux associés à l'instruction d'opération ; et
le moyen de transfert de données amène une pluralité d'éléments de données à être transférée de manière consécutive à partir d'un dispositif d'entrée/sortie externe vers, parmi une pluralité de banques incluses dans la mémoire externe (150), une banque qui stocke des données plus anciennes.

10. Dispositif de traitement de données (101, 102, 103, 104, 105, 106, 107, 108) selon la revendication 4, dans lequel :
dans le cas où une mémoire cache (140, 240, 340, 440) de la première section de calcul n'inclut pas de données correspondant aux informations d'adresse ajoutées à l'instruction de chargement, la première section de calcul attend des données qui doivent être transférées à partir d'une mémoire externe (150), et définit, à titre de condition de fin d'opération, un achèvement d'un nombre prédéterminé d'opérations par au moins une de la deuxième section de calcul et des suivantes, le nombre prédéterminé correspondant au nombre de mots transférés associés à l'instruction d'opération.
